# EUROPEAN PATENT SPECIFICATION

(11) **EP 4 198 521 B1**
(45) Date of publication and mention of the grant of the patent: **29.01.2025**
(21) Application number: 22212232.7
(22) Date of filing: 08.12.2022
(51) Int. Cl.: G01P 1/08, G01P 13/02

(54) **APPARATUSES, COMPUTER-IMPLEMENTED METHODS, AND COMPUTER PROGRAM PRODUCTS FOR GENERATING INTUITIVE DATA INDICATORS FOR VEHICLE USER INTERFACES**
VORRICHTUNGEN, COMPUTERIMPLEMENTIERTE VERFAHREN UND COMPUTERPROGRAMMPRODUKTE ZUR ERZEUGUNG INTUITIVER DATENINDIKATOREN FÜR FAHRZEUGBENUTZERSCHNITTSTELLEN
APPAREILS, PROCÉDÉS MIS EN UVRE PAR ORDINATEUR ET PRODUITS-PROGRAMMES INFORMATIQUES POUR GÉNÉRER DES INDICATEURS DE DONNÉES INTUITIFS POUR DES INTERFACES UTILISATEUR DE VÉHICULE

(30) Priority: 17.12.2021 US 202117644943
(43) Date of publication of application: 21.06.2023
(73) Proprietor: Honeywell International Inc., Charlotte, NC 28202 (US)
(72) Inventor: MONTOYA, Roberto Gudino, Charlotte, 28202 (US); KEBERLE, Kelsey Marie, Charlotte, 28202 (US); CROUCH, Steven Curtis, Charlotte, 28202 (US)
(74) Representative: Haseltine Lake Kempner LLP

(56) References cited:
- JP-A- 2006 292 656
- US-A1- 2014 253 597
- US-A1- 2015 330 803
- US-A1- 2017 052 206

## Description

### TECHNICAL FIELD

Embodiments of the present disclosure generally relate to configuring and outputting improved user interfaces, and specifically to generating and outputting to display(s) associated with an aerial vehicle improved user interface(s) that intuitively indicate data captured associated with the environment of the aerial vehicle.

### BACKGROUND

In many contexts, there are different user interfaces rendered to a display of an aerial vehicle. Such user interfaces are intended to provide situational awareness, contextual information, and/or other helpful data to pilot(s) of the aerial vehicle, for example to help the pilot(s) make informed decisions regarding how to control the aerial vehicle. In various circumstances, the pilot(s) constantly analyze the user interfaces to stay apprised of the current operation of the aerial vehicle, environmental factors, and anything else that may affect how the aerial vehicle should be controlled. In this regard, the pilot(s) may have a limited amount of time to view and understand what each element of the interface is meant to convey, and the ramifications such an element may have on operating the aerial vehicle.

Inventors have discovered problems with current implementations of configuring and outputting user interfaces that intuitively provide indications of particular data. Through applied effort, ingenuity, and innovation, the inventors have solved many of these problems by developing the solutions embodied in the present disclosure, the details of which are described further herein.

US 2014/253597 A1 relates to a device, program, and method for displaying situation including observation data obtained by observing meteorological and/or hydrographic phenomena. Wind indicators visually indicate a direction and a speed of the wind in a 3D environment. US 2015/330803 A1 relates to an information display device and method. JP 2006 292656 A relates to a navigation system, and display method of meteorological information. US 2017/052206 A1 relates to a measurement device and measurement system.

### BRIEF SUMMARY

In general, embodiments of the present disclosure herein provide improved user interfaces for intuitively conveying a plurality of data values utilizing a dynamic wind indicator. Other implementations will be, or will become, apparent to one with skill in the art upon examination of the following figures and detailed description. It is intended that all such additional implementations be included within this description be within the scope of the disclosure and be protected within the scope of the following claims.

In accordance with a first aspect of the present disclosure, a computer-implemented method for causing rendering of a user interface including a specially-configured dynamic wind indicator. The computer-implemented method is performable by one or more specially configured computing device(s) embodied in hardware, software, firmware, and/or any combination thereof, for example as described herein. In one example embodiment, the example computer-implemented method includes receiving wind movement data comprising at least wind speed data and wind directionality data. The example computer-implemented method further includes causing rendering of a user interface comprising an animated dynamic wind indicator. In the example computer-implemented method, the dynamic wind indicator visually indicates a direction of a 3D environment based at least in part on the wind directionality data. Further in the example computer-implemented method, the animation speed of the dynamic wind indicator is configured based at least in part on the wind speed data.

Additionally or alternatively, in some embodiments of the example computer-implemented method, the dynamic wind indicator includes an animated 3D chevron row, and the computer-implemented method further includes setting an orientation of the animated 3D chevron row based at least in part on the wind directionality data, where the orientation points the animated 3D chevron row in the direction within the 3D environment; and setting an animation speed associated with the animated 3D chevron row based at least in part on the wind speed data.

Additionally or alternatively, in some embodiments of the example computer-implemented method, a further visual property of the dynamic indicator comprises an opacity property, a size property, or a color property, where the visual property is applied to an entirety of the dynamic wind indicator.

Additionally or alternatively, in some embodiments of the example computer-implemented method, causing rendering of the user interface including the dynamic wind indicator includes causing rendering of the user interface to a primary flight display of an aerial vehicle.

Additionally or alternatively, in some embodiments of the example computer-implemented method, at least a portion of the wind movement data is captured by at least one sensor of an aerial vehicle, and where the user interface is rendered to at least one display of the aerial vehicle.

Additionally or alternatively, in some embodiments of the example computer-implemented method, at least a portion of the wind movement data is received by a first aerial vehicle from a second aerial vehicle, and where the user interface is rendered to at least one display of the first aerial vehicle.

Additionally or alternatively, in some embodiments of the example computer-implemented method, the dynamic wind indicator includes at least one 3D object performing a continuous animation.

Additionally or alternatively, in some embodiments of the example computer-implemented method, the computer-implemented method further includes receiving, in real-time, updated wind movement data; and causing, in real-time, updated rendering of the dynamic wind indicator in the user interface based at least in part on the updated wind movement data.

Additionally or alternatively, in some embodiments of the example computer-implemented method, the computer-implemented method further comprising receiving orientation data associated with an aerial vehicle, where the direction of the 3D environment is based at least in part on the orientation data.

In accordance with a second aspect of the disclosure, an apparatus for causing rendering of a user interface including a specially-configured dynamic wind indicator is provided. In one example embodiment, the apparatus includes at least one processor and at least one memory having computer-coded instructions stored thereon, where the computer-coded instructions in execution with the at least one processor causes the apparatus to perform any one of the example computer-implemented methods described herein. In a second example embodiment apparatus, the apparatus includes means for performing each step of any one of the example computer-implemented methods described herein.

In accordance with a third aspect of the disclosure, a computer program product for causing rendering of a user interface including a specially-configured dynamic wind indicator is provided. In one example embodiment computer program product, the computer program product includes at least one non-transitory computer-readable storage medium having computer program code stored thereon that, in execution with at least one processor, configures the computer program product for performing any one of the example computer-implemented methods described herein.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example system that renders improved user interfaces in accordance with at least some example embodiments of the present disclosure.
FIG. 2 illustrates an example intuitive display apparatus in accordance with at least some example embodiments of the present disclosure.
FIG. 3 illustrates an example data flow for causing rendering of improved user interfaces in accordance with at least some example embodiments of the present disclosure.
FIG. 4 illustrates an example improved user interface including a dynamic wind indicator in accordance with at least some example embodiments of the present disclosure.
FIG. 5 illustrates an example improved user interface including an updated dynamic wind indicator based at least in part on a change in a direction travelled by an aerial vehicle in accordance with at least some example embodiments of the present disclosure.
FIG. 6A illustrates an example dynamic wind indicator including an animated 3D chevron row in accordance with at least some example embodiments of the present disclosure.
FIG. 6B illustrates an example dynamic wind indicator including an animated 3D chevron row set to an updated orientation in accordance with at least some example embodiments of the present disclosure.
FIG. 6C illustrates an example dynamic wind indicator including a solid 3D arrow in accordance with at least some example embodiments of the present disclosure.
FIG. 6D illustrates an example dynamic wind indicator including a solid 3D arrow set to an updated orientation in accordance with at least some example embodiments of the present disclosure.
FIG. 7 illustrates a flowchart depicting example operations of an example process for causing rendering of improved user interface(s) in accordance with at least some example embodiments of the present disclosure.
FIG. 8 illustrates a flowchart depicting example operations of an example process for configuring a dynamic wind indicator including an animated 3D chevron row in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### OVERVIEW

While controlling a vehicle, users operating the vehicle ("operators") must stay apprised of all scenarios affecting the vehicle to safely control the vehicle. In various contexts, user interfaces may be generated and output, or otherwise rendered, via one or more displays of the vehicle that attempt to provide useful contextual information pertinent to the operator of the vehicle. In some such contexts, these user interfaces update as new information is received, requiring the operator to always be looking at the user interface or consistently checking the user interface for new updates. Often, the operator may only have a limited time to spend analyzing the interface as a whole and/or analyzing each interface element independently before such data is outdated. Alternatively or additionally, in some circumstances the operator must make a decision based on the data indicated via the interface (e.g., to control how to operate the vehicle), such that enabling the operator to make an informed decision as quickly as possible is desired.

Operation of aerial vehicles is one such example context where efficient conveying of information is especially desirable. At any given time, an operator of an aerial vehicle (e.g., a pilot) may be presented one or more user interface(s) via display(s) of the aerial vehicle, with each user interface depicting various information. The pilot may continuously monitor these user interface(s) as the pilot controls the aerial vehicle. In this regard, the pilot may analyze such user interface(s) to make an informed decision regarding what maneuvers are appropriate to control the aerial vehicle safely, in a desired direction, to perform a desired movement, and/or the like. Such user interface(s) often include multiple individual elements, each associated with different data and/or meant to convey different information to the pilot. As such, it is desirable for such interface element(s) to convey to the pilot the relevant information as accurately and quickly as possible.

Often, user interface(s) are generated with text elements that include data value(s) determined relevant to the user. One example context of such data value(s) includes wind speed and/or direction associated with wind impacting a particular aerial vehicle. However, such text elements may not be readily intuitive to a pilot for conveying the intended information. For example, given a wind speed for example, a pilot still must analyze the speed value to determine whether the speed is high or low. Additionally, given a wind direction for example, a pilot still must analyze the direction value to determine that direction as compared to a current direction of the aerial vehicle, and/or otherwise determine the effect that the wind direction will have on the aerial vehicle as it maneuvers. Further still, given both a wind speed and wind direction, a pilot still must combine these data values to determine the effect that the wind may have on the aerial vehicle. In this regard, the cognitive workload for the pilot to gain a complete situational awareness based on such data remains high, and in some circumstances it is difficult for a pilot to make an accurate decision based on such information (e.g., a decision regarding how to control the aerial vehicle) sufficiently quickly. A more intuitive mechanism for displaying such information (e.g., which may be more readily understood by a pilot) is therefore desirable.

Embodiments of the present disclosure provide for generating and outputting (e.g., by rendering) of improved user interface(s). In some embodiments, the user interface(s) are improved by including interface element(s) specially configured to intuitively convey a plurality of portion(s) of data utilizing limited interface element(s). For example, some embodiments of the present disclosure cause rendering of user interface(s) including at least one specially configured dynamic wind indicator. The dynamic wind indicator more intuitively (e.g., without the use of just text elements associated with raw data values) conveys pertinent information to an operator of a vehicle, allowing the operator to more readily garner a complete situational awareness based at least in part on such data and/or to more quickly make accurate decision(s) based on such data. The specially configured dynamic wind indicator in some such embodiments visually indicates a direction of 3D environment associated with wind movement data, and in some such embodiments the specially configured dynamic wind indicator includes at least one visual property configured based at least in part on wind movement data.

In this regard, such dynamic wind indicator(s) encode multiple data values by visually indicating such data values utilizing a single, specially configured and intuitive interface element. Such dynamic wind indicator(s) advantageously reduce the cognitive load required for a user (e.g., an operator) to accurately ascertain the information to be conveyed. Additionally, in this regard such embodiments enable the operator to reduce the time required to accurately perform a determination, and ultimately act on such a determination. By enabling quicker action, such embodiments thus reduce the likelihood of errors, unsafe scenarios, and/or other disastrous circumstances arising from incorrect determination(s) from an operator and/or delayed determination(s) by the operator due to unintuitive, poorly displayed information.

Additionally, in some embodiments, dynamic wind indicator(s) are generated that accurately update in real-time based on multiple portions of data to intuitively convey information as any or all of such underlying data portions update. For example, in some embodiments, a dynamic wind indicator is configured based at least in part on orientation data associated with an aerial vehicle that is determined in real-time. In this regard, as the orientation data associated with the aerial vehicle updates, the dynamic wind indicator(s) are updated to intuitively convey the same information (e.g., wind direction and speed) based on the newly updated orientation data. In this regard, such embodiments are advantageous over other mechanisms of conveying underlying wind movement data, for example which often merely depict raw data values and are agnostic to the orientation of the aerial vehicle itself thus diminishing the intuitiveness of such displayed data.

In the context of aerial vehicles, embodiments of the present disclosure particularly provide intuitive visual indicators that are included in user interface(s) rendered to one or more display(s) for viewing by user(s) of such vehicles, such as a flight crew. In this regard, embodiments of the present disclosure provide a clearer visual representation to the flight crew of particular data relevant to them (e.g., characteristics of the wind in the environment, such as wind speed and direction). Such embodiments intuitively provide a flight crew more context and situational awareness relative to their own vehicle position and/or orientation in three dimensional space. In this manner, by intuitively making the impact of such data (e.g., embodying wind speed and direction) understandable to said flight crew, embodiments reduce cognitive load of the flight operator and/or some or all members of a flight crew.

It will be appreciated that embodiments of the present disclosure may be advantageous for a myriad of vehicle types. In this regard, aerial vehicles are utilized as an exemplary type of vehicle for purposes of simplifying the disclosure. The description specific to aerial vehicles should not limit the scope of the disclosure unless otherwise explicitly stated.

### DEFINITIONS

"3D environment" refers to electronically managed data embodying or representing a three-dimensional space within which data embodying 3D object(s) is/are able to be positioned, configured, and/or rendered. In some embodiments, a 3D environment embodies a virtual environment that includes any number of 3D object(s).

"3D object" refers to electronically managed data embodying any virtual object depictable in a virtual 3D space. In some embodiments, a 3D object includes a data embodying the boundaries of an object positioned within a coordinate system corresponding to a 3D environment.

"Aerial vehicle" refers to any manned or unmanned vehicle capable of air travel. Non-limiting examples of an aerial vehicle include a plane, a helicopter, an unmanned aerial vehicle, an electronic vertical takeoff or landing aircraft, a jet, a drone, and a quadcopter. At least some aerial vehicles are controllable by system(s) onboard the aerial vehicle. At least some aerial vehicles are controllable by system(s) external from the aerial vehicle, including and without limitation remote control system(s), ground system(s), and centralized control system(s).

"Animated 3D chevron row" refers to a plurality of 3D chevrons that are oriented within a 3D environment and that, when rendered, performs one or more animation(s) that involves visual updating of one or more of the 3D chevron(s) or the plurality of 3D chevrons as a whole.

"Animation" refers to any change in the look, position, and/or any other visual aspect of a rendered interface element, or a sub-element depicted therein, between two or more points in time. In some contexts, an animation is depicted as frames of a precompiled video, set of images, or other precompiled sequence of data frames. In some contexts, an animation is depicted by updates to visual data object(s) in real-time.

"Animation speed" refers to a frame rate or movement speed by which an interface element, sub-element depicted therein, and/or virtual object, is updated as part of an animation. In some contexts, an animation speed corresponds to a frame rate at which a particular system displays updates for one or more interface elements. In some contexts, an animation speed corresponds to a movement speed or other factor that scales a change in at least one visual property of a depicted virtual object between updates.

"Dynamic wind indicator" refers to visually renderable data that visually indicates a plurality of characteristics associated with wind in a particular environment via a plurality of s at least a direction and a speed.

"Continuous animation" refers to an animation that forms a continuous loop or otherwise may continue for any number of frames.

"Orientation" refers to electronically managed data representing a direction or rotational data value(s) of a 3D object in a 3D environment. In some embodiments, an orientation is defined by a rotation vector and/or a position vector.

"Visual property" refers to any characteristic of renderable data that is visible to a user.

"Wind directionality data" refers to electronically managed data that represents a direction of travel of wind within a particular environment.

"Wind movement data" refers to electronically managed data that represents one or more characteristics of wind travelling in a particular environment. In some embodiments, wind movement data includes one or more portion(s) of data embodying wind directionality data and wind speed data.

"Wind speed data" refers to electronically managed data that represents a speed at which wind is travelling within a particular environment.

### EXAMPLE SYSTEMS AND APPARATUSES OF THE DISCLOSURE

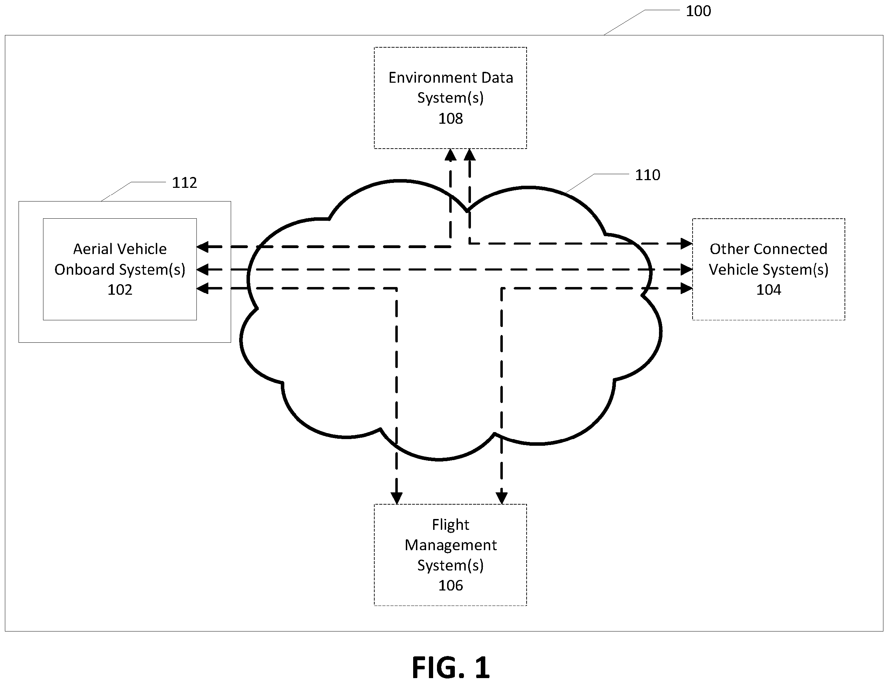

FIG. 1 illustrates an example system that renders improved user interfaces in accordance with at least some example embodiments of the present disclosure. Specifically, FIG. 1 depicts an example system 100 within which embodiments of the present disclosure may operate to provide improved, intuitive user interface(s), for example including specially configured at least one dynamic wind indicator. As depicted, the system 100 includes an aerial vehicle onboard system(s) 102 associated with an aerial vehicle 112. Additionally or alternatively, in some embodiments, the aerial vehicle 112 is communicable (e.g., via the aerial vehicle onboard system(s) 102) with one or more external computing device(s) and/or system(s). For example, in some embodiments, the aerial vehicle onboard system(s) 102 is optionally communicable with some or all of the other connected vehicle system(s) 104, flight management system(s) 106, and/or environment data system(s) 108. In some such embodiments, the aerial vehicle onboard system(s) 102 communicates with the other connected vehicle system(s) 104, flight management system(s) 106, and/or environment data system(s) 108 via one or more specially configured communications network(s), for example the communications network 110.

In some embodiments, the aerial vehicle onboard system(s) 102 includes any number of computing device(s) and/or system(s) embodied in hardware, software, firmware, and/or a combination thereof, that control, operate, and/or otherwise function onboard an aerial vehicle 112. For example, in some embodiments, the aerial vehicle onboard system(s) 102 includes one or more physical component(s) of the aerial vehicle 112, including and without limitation one or more display(s), flight management system(s), engine(s), wing(s), prop(s), motor(s), antenna(s), landing gear(s), and/or the like. In some embodiments, the aerial vehicle onboard system(s) 102 includes one or more sensor(s) that gather, collect, and/or otherwise aggregates sensor data relevant to operation of the aerial vehicle 112, associated with the aerial vehicle 112, and/or otherwise associated with an environment of the aerial vehicle 112. For example, in some embodiments, the aerial vehicle onboard system(s) 102 includes one or more sensor(s) that capture and/or receive wind movement data associated with wind impacting the aerial vehicle 112 within a surrounding environment.

Additionally or alternatively, in some embodiments, the aerial vehicle onboard system(s) 102 includes one or more computing device(s) and/or system(s) embodied in hardware, software, firmware, and/or a combination thereof, that control(s) operation of one or more physical components of the aerial vehicle 112. For example and without limitation, in some embodiments the aerial vehicle onboard system(s) 102 includes computing device(s) and/or system(s) that control one or more display(s), flight management system(s), engine(s), wing(s), prop(s), motor(s), antenna(s), landing gear(s), sensor(s), and/or the like.

Additionally or alternatively, in some embodiments, the aerial vehicle onboard system(s) 102 includes one or more computing device(s) and/or system(s) embodied in hardware, software, firmware, and/or a combination thereof, that generates and/or otherwise causes rendering of one or more user interface(s) renderable to one or more display(s) onboard and/or otherwise associated with the aerial vehicle 112. In some embodiments such computing device(s) and/or system(s) specially configure some or all element(s) of user interface(s) to be rendered, for example at least a dynamic wind indicator, based at least in part on received data. For example, in some such embodiments the aerial vehicle onboard system(s) 102 includes computing device(s) and/or system(s) that specially configure a dynamic wind indicator based at least in part on received wind movement data such that the dynamic wind indicator visually indicates multiple portions of the wind movement data. It should be appreciated that the aerial vehicle onboard system(s) 102 in some embodiments includes any of a myriad of specially configured computing device(s) and/or system(s) that enable the aerial vehicle 112 to operate in a particular manner of airborne travel.

In some embodiments, the aerial vehicle onboard system(s) 102 includes one or more personal computer(s), end-user terminal(s), monitor(s) or other display(s), and/or the like. Additionally or alternatively, in some embodiments, the aerial vehicle onboard system(s) 102 includes one or more data repository/data repositories embodied in hardware, software, firmware, and/or any combination thereof, to support functionality provided by the aerial vehicle onboard system(s) 102. For example, in some embodiments, such data repositories provide data storage functionality on the same computing device(s) and/or other dedicated computing device(s) of the aerial vehicle onboard system(s) 102. Additionally or alternatively still, in some embodiments, the aerial vehicle onboard system(s) 102 includes one or more specially configured integrated system(s), circuit(s), and/or the like that process data received by and/or control one or more other computing device(s) and/or system(s), or physical component(s), associated with the aerial vehicle 112.

The aerial vehicle 112 may embody any of a myriad of aerial vehicle types. The aerial vehicle 112 includes any number of physical component(s) that enable air travel, including and without limitation prop(s), rotor(s), engine(s), wing(s), and/or the like. Additionally or alternatively, the aerial vehicle 112 includes any number of a myriad of controls for operating the physical components of the aerial vehicle 112 to achieve such airborne travel. For example, in some embodiments, the aerial vehicle 112 includes a forward-flying aerial vehicle. In some embodiments, the aerial vehicle 112 includes a vertical takeoff and landing aerial vehicle. It will be appreciated that the aerial vehicle 112 may be entirely manually controlled, semi-autonomous, fully autonomous for one or more operations, or any combination thereof. Non-limiting examples of an aerial vehicle 112 include a plane generally, a helicopter, a drone, an electric vertical takeoff and landing aircraft (eVTOL), a prop-based aircraft, a jet, and/or the like. Any particular vehicle type utilized in this disclosure is purely illustrative, and not to limit the scope of this disclosure or the appended claims presented herewith.

The other connected vehicle system(s) 104 includes computing device(s), system(s), and/or onboard system(s) of other vehicle(s) communicatively coupled with the aerial vehicle 112 associated with aerial vehicle onboard system(s) 102. It will be appreciated that the other connected vehicle system(s) 104 in some embodiments includes computing device(s) and/or system(s) of one or more other aerial vehicle(s) of the same-type operating within the same environment as the aerial vehicle associated with aerial vehicle onboard system(s) 102. For example, in some embodiments some of the other connected vehicle system(s) 104 include computing device(s) and/or system(s) of other aerial vehicle(s) in a fleet of a particular type of aerial vehicle. In some such embodiments, sensor data (for example) captured via such other connected vehicle system(s) 104 similarly may be applicable to the aerial vehicle 112 as well. Additionally or alternatively, in some embodiments, the other connected vehicle system(s) 104 includes computing device(s) and/or system(s) of ground vehicle(s), other types of aerial vehicle(s), and/or the like, or any combination thereof.

In some embodiments, the aerial vehicle onboard system(s) 102 receives data from one or more of the other connected vehicle system(s) 104 that provides additional context with respect to the environment in which the aerial vehicle 112 associated with aerial vehicle onboard system(s) 102 is operating. Such data may include sensor data that the aerial vehicle onboard system(s) 102 is able to capture, or in some embodiments includes sensor data not capturable by the aerial vehicle onboard system(s) 102. For example, in some embodiments, the aerial vehicle onboard system(s) 102 communicates with the other connected vehicle system(s) 104 to determine a position of other aerial vehicle(s), object(s), environmental feature(s) (e.g., buildings, terrain, and/or the like) within the environment of the aerial vehicle associated with aerial vehicle onboard system(s) 102, and/or the like. Additionally or alternatively, in some embodiments, the aerial vehicle onboard system(s) 102 communicate with one or more of the other connected vehicle system(s) 104 to receive sensor data of a particular data type (e.g., wind movement data) that is not capturable directly by the aerial vehicle onboard system(s) 102. For example, in some embodiments, the aerial vehicle associated with the aerial vehicle onboard system(s) 102 does not include a particular sensor for capturing a particular type of sensor data, and instead receives such data of the particular data type from the other connected vehicle system(s) 104.

In some embodiments, the flight management system(s) 106 includes one or more computing device(s) embodied in hardware, software, firmware, and/or the like that generate, assign, and/or maintain flight plan information for one or more aerial vehicle(s). For example, in some embodiments, the flight management system(s) 106 include computing device(s) and/or system(s) of an air traffic control system and/or other authoritative entity that assigns flight plan information to one or more aerial vehicle(s). Such information may include, without limitation, flight plan information embodying a VFR flight plan, an IFR flight plan, a composite flight plan, and/or the like defining conditions for operating an aerial vehicle 112 within a particular environment. In some embodiments, the flight management system(s) 106 captures and/or otherwise obtains particular data for relaying to the aerial vehicle 112, for example wind movement data.

In some embodiments, the flight management system(s) 106 includes one or more application server(s), end user terminal(s), personal computer(s), mobile device(s), user device(s), and/or the like that generate, assign, and/or transmit flight plan information to aerial vehicle(s). Additionally or alternatively, in some embodiments, the flight management system(s) 106 includes one or more data repository/repositories embodied in hardware, software, firmware, and/or a combination thereof, that stores flight plan information, links between flight plan information and particular aerial vehicle(s), and/or the like. In some such embodiments, the flight plan information includes wind movement data for one or more environment(s) within which an aerial vehicle is or will be operating. Additionally or alternatively, in some embodiments, the flight management system(s) 106 includes one or more computing device(s) and/or system(s) that detect and/or monitor operation of one or more aerial vehicle(s) within an environment. For example, in some embodiments, the flight management system(s) 106 includes one or more radar system(s) that monitor one or more environment(s).

The environment data system(s) 108 includes one or more computing device(s) and/or system(s) that monitor, capture, and/or otherwise store data representing one or more aspect(s) of a real-world environment, object(s) therein, and/or aerial vehicle(s) therein. In some embodiments, the environment data system(s) 108 includes one or more data repository/repositories that store wind movement data for one or more environment(s). In some embodiments, the environment data system(s) 108 include one or more specially configured sensor(s) that capture wind speed data for a particular environment (e.g., one or more anemometer(s), pressure-based wind speed and/or direction sensor(s), and/or other sensor(s) configured to capture wind speed data, wind directionality data, and/or wind movement data. Additionally or alternatively, in some embodiments, the environment data system(s) 108 includes one or more data repository/repositories that store data embodying other environmental aspect(s) that interact with or otherwise affect operation of aerial vehicle(s) in an environment, for example the aerial vehicle 112. In some embodiments, the environment data system(s) 108 includes a satellite system that monitors one or more aspect(s) of an environment, for example a satellite weather provider and/or satellite radio provider to the aerial vehicle 112. Alternatively or additionally still, in some embodiments, the environment data system(s) 108 embody or include a flight services data provider system (e.g., a Honeywell flight services system). In some embodiments, the environment data system(s) 108 embodies a subsystem of the flight management system(s) 106 and/or other connected vehicle system(s) 104.

In some embodiments, the environment data system(s) 108 includes one or more application server(s), end user terminal(s), personal computer(s), mobile device(s), user device(s), and/or the like. Additionally or alternatively, in some embodiments, the environment data system(s) 108 includes one or more database server(s) specially configured to store data pushed from one or more other computing device(s) and/or system(s). In some embodiments, the environment data system(s) 108 includes one or more remote and/or cloud computing device(s) accessible to the aerial vehicle onboard system(s) 102, other connected vehicle system(s) 104, and/or flight management system(s) 106 over a communications network, such as the communications network 110.

In some embodiments the communications network 110 enables communication between various computing device(s) and/or system(s) utilizing one or more combination(s) of wireless and/or wired data transmission protocol(s). In this regard, the communications network 110 may embody any of a myriad of network configurations. In some embodiments, the communications network 110 embodies a public network (e.g., the Internet) in whole or in part. In some embodiments, the communications network 110 embodies a private network (e.g., an internal network between particular computing devices) in whole or in part. Alternatively or additionally, in some embodiments the communications network 110 embodies a direct or private connection facilitated over satellite or radio system(s) that enables long-range communication between aerial vehicle(s) and corresponding grounded system(s). In some other embodiments, the communications network 110 embodies a hybrid network (e.g., a network enabling internal communications between particular connected computing devices and external communications with other computing devices). The communications network 110 may include one or more base station(s), relay(s), router(s), switch(es), cell tower(s), communications cable(s), satellite(s), radio antenna(s) and/or related control system(s), and/or associated routing station(s), and/or the like. In some embodiments, the communications network 110 includes one or more user entity-controlled computing device(s) and/or other enterprise device(s) (e.g., an end-user's or enterprise router, modem, switch, and/or other network access point) and/or one or more external utility devices (e.g., Internet service provider communication tower(s), cell tower(s), and/or other device(s)). In some embodiments, the aerial vehicle onboard system(s) 102 communicates with one or more of the other connected vehicle system(s) 104, flight management system(s) 106, environment data system(s) 108 over the communications network 110 to receive and/or transmit the data described herein for generating the user interface(s) for providing to one or more display(s) of an aerial vehicle. In some embodiments, the communications network 110 embodies a Datalink uplink to the aerial vehicle 112 (e.g., via the aerial vehicle onboard system(s) 102) that communicatively couple the airborne system(s) to the ground system(s).

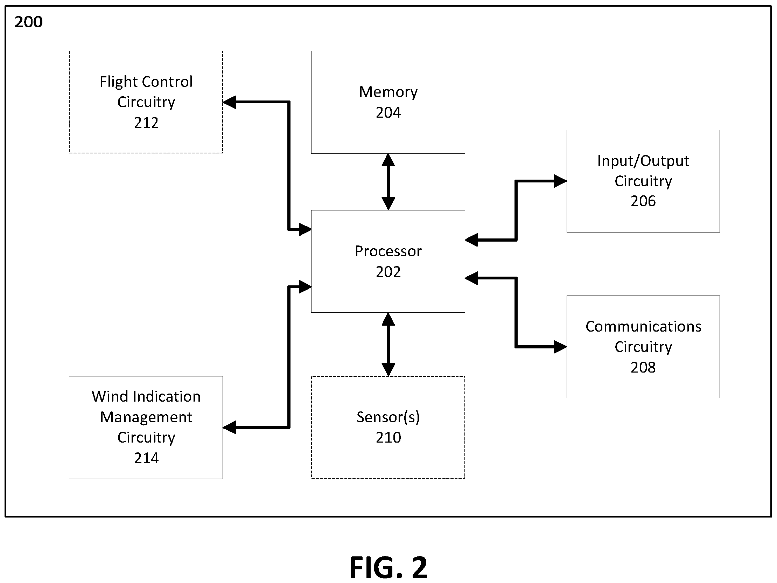

FIG. 2 illustrates an example intuitive display apparatus in accordance with at least some example embodiments of the present disclosure. Specifically, FIG. 2 depicts an intuitive display apparatus 200. In some embodiments, one or more computing device(s) and/or system(s) of an aerial vehicle, for example included in or embodied by the aerial vehicle onboard system(s) 102 onboard an aerial vehicle 112, is embodied by one or more computing devices such as the intuitive display apparatus 200 as depicted and described in FIG. 2. As depicted, the intuitive display apparatus 200 includes a processor 202, memory 204, input/output circuitry 206, communications circuitry 208, sensor(s) 210, flight control circuitry 212, and/or wind indication management circuitry 214. In some such embodiments, the flight control circuitry 212 is optional. In some embodiments, the intuitive display apparatus 200 is configured, using one or more of the sets of circuitry embodying processor 202, memory 204, input/output circuitry 206, communications circuitry 208, sensor(s) 210, flight control circuitry 212, and/or wind indication management circuitry 214, to execute the operations described herein.

Although components are described with respect to functional limitations, it should be understood that the particular implementations necessarily include the user of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the intuitive display apparatus 200 provide or supplement the functionality of another particular set of circuitry. For example, the processor 202 in some embodiments provides processing functionality to any of the other sets of circuitry, the memory 204 provides storage functionality to any of other the sets of circuitry, the communications circuitry 208 provides network interface functionality to any of the other sets of circuitry, and/or the like.

In some embodiments, the processor 202 (and/or co-processor or any other processing circuitry assisting or otherwise associated with the processor) is/are in communication with the memory 204 via a bus for passing information among components of the intuitive display apparatus 200. In some embodiments, for example, the memory 204 is non-transitory and includes for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the intuitive display apparatus 200 to carry out various functions in accordance with example embodiments of the present disclosure.

In various embodiments, the processor 202 is embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the intuitive display apparatus 200, and/or one or more remote or "cloud" processor(s) external to the intuitive display apparatus 200.

In an example embodiment, the processor 202 is configured to execute instructions stored in the memory 204 or otherwise accessible to the processor 202. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with generating dynamic wind indicator(s) and/or causing rendering of particular user interface(s) depicting dynamic wind indicator(s), for example as described with respect to aerial vehicle onboard system(s) 102 in FIG. 1 and/or as described further herein. In some embodiments, the processor 202 includes hardware, software, firmware, and/or a combination thereof, that receives data indicating one or more characteristics of wind in an environment, for example and without limitation wind movement data, wind speed data, and/or wind directionality data. Additionally or alternatively, in some embodiments, the processor 202 includes hardware, software, firmware, and/or a combination thereof, that causes rendering of user interface(s) including one or more specially configured interface element(s), for example and without limitation including at least a dynamic wind indicator. Additionally or alternatively, in some embodiments, the processor 202 includes hardware, software, firmware, and/or a combination thereof, that in real-time updates rendering of a user interface and/or interface element(s) thereof in response to updated data indicating one or more characteristics of wind in an environment.

In some embodiments, intuitive display apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202, and/or input/output circuitry 206 comprising a processor, in some embodiments is configured to control one or more functions of one or more user interface elements through computer program instructions (e.g., software and/or firmware) stored on a memory accessible to the processor 202 (e.g., memory 204, and/or the like). In some embodiments, the input/output circuitry 206 includes or utilizes a user-facing application to provide input/output functionality to a service maintainer device and/or other display associated with a user. In some embodiments, the input/output circuitry 206 includes a primary flight display and/or a multi-function display of an aerial vehicle. Additionally or alternatively, in some embodiments, the input/output circuitry 206 includes one or more software-rendered user interface(s) including interface element(s) that depict particular data and/or information, and/or that receive user input.

The communications circuitry 208 includes any means such as a device or circuitry embodied in either hardware or a combination of hardware and software that is configured to receive and/or transmit data from/to a communications network and/or any other computing device, circuitry, or module in communication with the intuitive display apparatus 200. In this regard, the communications circuitry 208 includes, for example in some embodiments, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from one or more computing device(s) and/or system(s) of other connected vehicle system(s) 104, flight management system(s) 106, and/or environment data system(s) 108, in communication with the intuitive display apparatus 200.

The sensor(s) 210 includes hardware, software, firmware, and/or a combination thereof, that supports generation, capturing, aggregating, retrieval, and/or receiving of one or more portions of sensor data. In some embodiments, the sensor(s) 210 includes one or more discrete component(s) of an aerial vehicle. The sensor(s) 210 in some embodiments are affixed to, within, and/or otherwise as a part of an aerial vehicle including or otherwise associated with the intuitive display apparatus 200. For example, in some embodiments, one or more of the sensor(s) 210 is/are mounted to the aerial vehicle, such as the aerial vehicle 112. Non-limiting examples of sensor(s) 210 include altimeter(s) (e.g., radio and/or barometric), pressure sensor(s), pilot tube(s), anemometer(s), image camera(s), video camera(s), infrared sensor(s), and/or the like. In some embodiments, the sensor(s) 210 include one or more computing device(s) embodying a wind sensor that captures wind speed data, wind directionality data, and/or wind movement data.

Additionally or alternatively, in some embodiments, the sensor(s) 210 include communication system(s) that enable aggregation of one or more portion(s) of flight sensor data from one or more external computing device(s) and/or system(s) communicable with the intuitive display apparatus 200, for example other connected vehicle system(s) 104, flight management system(s) 106, and/or environment data system(s) 108. For example, in some embodiments, the sensor(s) 210 includes one or more computing device(s) and/or system(s) that is/are specially configured to receive one or more portion(s) of wind movement data, wind speed data, and/or wind directionality data from one or more other aerial vehicle(s). The other aerial vehicle(s) may capture such data utilizing one or more onboard sensor(s), and/or similarly receive such data from other aerial vehicle(s) or other computing system(s) as well (e.g., functioning as a relay). In some embodiments, the sensor(s) 210 includes one or more computing device(s) and/or system(s) that is/are specially configured to receive one or more portion(s) of wind movement data, wind speed data, and/or wind directionality data from one or more ground computing system(s), for example environment data system(s) 108 and/or flight management system(s) 106.

In some embodiments, the sensor(s) 210 additionally or alternatively include any of a myriad of sensor(s) conventionally associated with drone(s), helicopter(s), and/or other urban air mobility aerial vehicle(s). Additionally or alternatively, in some embodiments, the sensor(s) 210 include one or more high-sensitivity sensor(s) to facilitate enable high accuracy capturing of data in certain circumstances. For example, in some embodiments, the sensor(s) 210 includes one or more high-sensitivity wind sensor(s) that capture detailed wind movement data while an aerial vehicle is in flight. Such higher fidelity sensor(s) may supplement and/or, in other embodiments, replace the data captured by such sensor(s) with lower fidelity.

In some embodiments, the sensor(s) 210 includes hardware, software, firmware, and/or a combination thereof, embodying one or more navigation sensor(s). In some embodiments, the navigation sensor(s) includes a global positioning satellite (GPS) tracking chip and/or the like enabling location services to be requested and/or determined for a particular aerial vehicle. Additionally or alternatively, in some embodiments, the sensor(s) 210 includes hardware, software, firmware, and/or any combination thereof, embodying inertial navigation sensor(s) that measures speed, acceleration, orientation, and/or position-related data in a 3D environment. Additionally or alternatively, in some embodiments, the sensor(s) 210 includes one or more camera(s) associated with a synthetic vision system (SVS). In some such embodiments, such an SVS camera captures image data representation(s) of the real-world environment around an aerial vehicle for use in generating corresponding user interface(s) depicting he captured image data, augmenting such image data, and/or otherwise providing data to enable an operator to acquire situational awareness based at least in part on the captured image data. It will be appreciated that, in some embodiments, the sensor(s) 210 includes a separate processor, specially configured field programmable gate array (FPGA), or a specially programmed application specific integrated circuit (ASIC).

The optional flight control circuitry 212 includes hardware, software, firmware, and/or a combination thereof, that supports functionality associated with navigating and/or controlling an aerial vehicle. In some embodiments, flight control circuitry 212 includes hardware, software, firmware, and/or a combination thereof, that receives flight detail data (e.g., embodying a flight plan), location service(s) data representing a location of the aerial vehicle, and/or the like. Additionally or alternatively, in some embodiments, the flight control circuitry 212 includes hardware, software, firmware, and/or a combination thereof, that depicts interface element(s) representing at least a flight path or indication where the aerial vehicle should travel.

Additionally or alternatively, in some embodiments, the flight control circuitry 212 includes hardware, software, firmware, and/or a combination thereof, that autonomously control(s) one or more component(s) of an aerial vehicle. In some such embodiments, the flight control circuitry 212 autonomously control(s) one or more physical component(s) of the aerial vehicle to facilitate movement of the aerial vehicle along a particular flight path. Alternatively or additionally, in some embodiments, the flight control circuitry 212 includes hardware, software, firmware, and/or a combination thereof, that semi-autonomously control(s) one or more component(s) of an aerial vehicle, for example where certain aspects of the operation of the aerial vehicle are autonomously performed and others (e.g., directional control) is/are controlled by a user (e.g., a pilot). Alternatively or additionally, in some embodiments, the flight control circuitry 212 includes hardware, software, firmware, and/or a combination thereof, that receives pilot input for controlling one or more component(s) of an aerial vehicle, for example via vehicle flight control(s) to alter speed and/or direction of the aerial vehicle. Alternatively or additionally, in some embodiments, the flight control circuitry 212 includes hardware, software, firmware, and/or a combination thereof, that causes changes to an operational mode of an aerial vehicle, for example autonomously based at least in part on one or more data-driven event(s) and/or triggers, or in response to user input initiating the change in operational mode. It will be appreciated that, in some embodiments, the flight control circuitry 212 includes a separate processor, specially configured field programmable gate array (FPGA), or a specially programmed application specific integrated circuit (ASIC).

The wind indication management circuitry 214 includes hardware, software, firmware, and/or a combination thereof, that supports various functionality associated with generating, updating, and/or causing rendering of a dynamic wind indicator. In some embodiments, the intuitive display apparatus 200 includes hardware, software, firmware, and/or a combination thereof, that generates a dynamic wind indicator based at least in part on wind movement data. Additionally or alternatively, in some embodiments, the intuitive display apparatus 200 includes hardware, software, firmware, and/or a combination thereof, that sets an orientation of a dynamic wind indicator. Additionally or alternatively, in some embodiments, the intuitive display apparatus 200 includes hardware, software, firmware, and/or a combination thereof, that one or more visual property/visual properties of a dynamic wind indicator. Additionally or alternatively, in some embodiments, the intuitive display apparatus 200 includes hardware, software, firmware, and/or a combination thereof, that causes rendering of a dynamic wind indicator to at least one user interface. It will be appreciated that, in some embodiments, the wind indication management circuitry 214 includes a separate processor, specially configured field programmable gate array (FPGA), or a specially programmed application specific integrated circuit (ASIC).

It will be appreciated that, further in some embodiments, two or more of the sets of circuitries 202-214 are combinable. Alternatively or additionally, in some embodiments, one or more of the sets of circuitry 202-214 perform some or all of the functionality described associated with another component. For example, in some embodiments, one or more of the sets of circuitry 202-214 are combined into a single component embodied in hardware, software, firmware, and/or a combination thereof. For example, in some embodiments, two or more of the flight control circuitry 212 and wind indication management circuitry 214 are embodied by a single set of circuitry that performs the combined operations of the individual sets of circuitry. Similarly, in some embodiments, one or more of the sets of circuitry, for example flight control circuitry 212 and/or wind indication management circuitry 214 is/are combined with the processor 202, such that the processor 202 performs one or more of the operations described above with respect to each of these other sets of circuitry.

### EXAMPLE DATA FLOWS OF THE DISCLOSURE

Having described example systems and apparatuses in accordance with the present disclosure, example data flow of the disclosure will now be discussed. It will be appreciated that the depicted and described data flows are performed by and/or between any of the system(s), apparatus(es), and/or the like described herein. For example, in some embodiments, the data flow represents transmission(s) and/or transformation of data object(s) between component(s) of the intuitive display apparatus 200. Alternatively or additionally, in some embodiments, the data flow represents transmission(s) and/or transformation of data between computing device(s), system(s), and/or external apparatus(es) of the present disclosure.

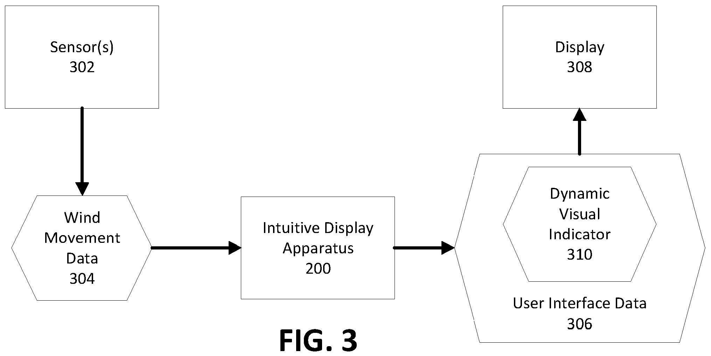

FIG. 3 illustrates an example data flow for causing rendering of improved user interfaces in accordance with at least some example embodiments of the present disclosure. Specifically, FIG. 3 depicts a data flow for generation of a user interface including a dynamic wind indicator. The user interface is generated based at least in part on user interface data 306 generated by an intuitive display apparatus 200.

As illustrated, sensor(s) 302 generates and/or captures wind movement data 304. In some embodiments, the wind movement data 304 includes at least wind speed data. The wind speed data in some embodiments represents a rate of speed at which wind in a particular environment is travelling, for example as captured by a wind speed sensor, pressure sensor, anemometer, and/or the like of the sensor(s) 302. Additionally or alternatively, in some embodiments, the wind movement data 304 includes at least wind directionality data. In some such embodiments, the wind directionality data represents an absolute and/or relative direction of wind within a particular environment, for example as captured by a wind direction sensor, anemometer, and/or the like of sensor(s) 302. In some embodiments, the same sensor(s) of the sensor(s) 302 capture both wind speed data and wind directionality data of the wind movement data 304.

The wind movement data 304 is transmitted from the sensor(s) 302 to the intuitive display apparatus 200 for processing. In some embodiments, the intuitive display apparatus 200 processes the wind movement data 304 to generate a dynamic visual indicator based at least in part on the wind movement data 304. For example, in some embodiments, the intuitive display apparatus 200 generates a dynamic wind indicator 310 based at least in part on the wind movement data 304. In some such embodiments, the intuitive display apparatus 200 generates the dynamic wind indicator 310 at a particular orientation based at least in part on the wind movement data 304. For example, in some embodiments, the intuitive display apparatus 200 sets the dynamic wind indicator 310 at a particular orientation based at least in part on a direction within a three-dimensional environment represented by the wind movement data 304. In some such embodiments, the intuitive display apparatus 200 sets the dynamic wind indicator 310 at a particular orientation additionally based at least in part on heading data indicating a direction of travel for an aerial vehicle. The heading data may be stored by the intuitive display apparatus 200, received via one or more of the sensor(s) 302, received from an external data system, and/or the like. In some such embodiments, the intuitive display apparatus 200 sets the orientation of the dynamic wind indicator 310 to face an impact vector determined from the wind orientation data and the vehicle direction data (e.g., embodying heading data for an aerial vehicle). The intuitive display apparatus 200 sets an animation speed of the dynamic wind indicator 310 based at least in part on the wind movement data 304, the wind speed data thereof. Alternatively or additionally, in some such embodiments, the intuitive display apparatus 200 sets a color, size, or the like of the dynamic wind indicator based at least in part on at least a portion of the wind movement data 304, for example wind speed data thereof.

The intuitive display apparatus 200 generates user interface data 306 for rendering to one or more display(s), such as the display 308. In some embodiments, the user interface data 306 includes data specially configured to cause rendering of a particular user interface. The user interface in some embodiments includes at least the dynamic wind indicator 310. In some embodiments, the user interface data 306 represents a user interface that includes the dynamic wind indicator 310 as a sub-interface or interface element thereof. It will be appreciated that the user interface data 306 in some embodiments embodies a complete user interface to be rendered to the display 308. In other embodiments, the user interface data 306 includes data object(s), portion(s), and/or the like, utilized by the display 308 and/or a computing device associated therewith (e.g., a client device) to configure one or more element(s) of a user interface. For example, in some embodiments, the user interface data 306 includes or embodies data utilized to generate or configure one or more interface element(s) of a user interface represented by previously received data.

In some embodiments, the display 308 is visible to at least one user. In some embodiments, the display 308 embodies or includes a primary flight display associated with an aerial vehicle. In this regard, a user, such as a pilot or other operator of the aerial vehicle, may utilize user interface(s) rendered via the display 308 to quickly and consistently attain situational awareness regarding an environment around the aerial vehicle. For example, in some contexts, the dynamic wind indicator 310 is included in a user interface rendered via the display 308 to provide an intuitive and efficient indicator of wind movement data 304 to the user, enabling the user to quickly and accurate ascertain situational awareness regarding the surrounding environment.

In some embodiments, the data flow proceeds continuously to dynamically update one or more aspect(s) of the user interface. For example, in some embodiments, the intuitive display apparatus 200 receives, at predefined interval(s) and/or continuously, wind movement data 304 associated with a particular environment. It will be appreciated that as one or more aspects of the environment change (e.g., wind speed, wind directionality, and/or the like) the data value(s) represented by the wind movement data 304 similarly update. In some such embodiments, the intuitive display apparatus 200 generates and/or configures an updated dynamic wind indicator 310, and/or causes rendering of updates to the user interface data 306 including an updated dynamic wind indicator 310. One or more aspects of the dynamic wind indicator 310 may be updated based at least in part on the updates to the wind movement data 304, for example by being set to an updated orientation, updating one or more visual properties, and/or the like. The updates to the user interface data 306 may subsequently be outputted, transmitted, and/or otherwise provided to the display 308 for rendering, for example to replace and/or update one or more interface element(s) visually depicting the dynamic wind indicator 310. In this regard, as the wind movement data 304 is updated (e.g., as captured by sensor(s) 302 due to changes in the wind in a particular environment), the intuitive display apparatus 200 causes rendering of a consistently updated and accurate dynamic wind indicator 310.

In some embodiments, the sensor(s) 302 include one or more sensor(s) onboard an aerial vehicle, such that the sensor(s) 302 capture and/or otherwise receive wind movement data 304 as the aerial vehicle moves throughout an environment. In some such embodiments, the sensor(s) 302 are onboard the aerial vehicle together with the intuitive display apparatus 200. Additionally or alternatively, in some embodiments, the display 308 is onboard the aerial vehicle together with the sensor(s) 302 and/or intuitive display apparatus 200. In this regard, in some such embodiments, the onboard component(s) and/or subsystem(s) communicate with one another to provide such user interface(s) via the display 308 to provide intuitive data (e.g., an updated dynamic wind indicator) that assists a user (e.g., an operator of the aerial vehicle) in attaining situational awareness regarding one or more aspect(s) of the environment of the aerial vehicle.

### EXAMPLE USER INTERFACES AND USER INTERFACE ELEMENTS OF THE DISCLOSURE

Having described example systems, apparatuses, and data flows in accordance with the present disclosure, example user interfaces and interface elements of the disclosure will now be discussed. It will be appreciated that, in some embodiments, the depicted and described user interface(s) and/or user interface element(s) are rendered via one or more display(s). In some embodiments, the user interface(s) and/or user interface element(s) are rendered via one or display(s) onboard an aerial vehicle, for example a primary flight display of the aerial vehicle or alternatively a multi-function display of the aerial vehicle. Additionally or alternatively, in some embodiments, the user interface(s) and/or user interface element(s) are rendered via one or more display(s) associated with controlling the aerial vehicle, which may be onboard or external from the aerial vehicle (e.g., as part of a ground control system). In some embodiments, the user interface(s) and/or user interface element(s) thereof are visible by an operator of the aerial vehicle (e.g., a pilot) to intuitively attain updated situational awareness and to control the aerial vehicle accordingly.

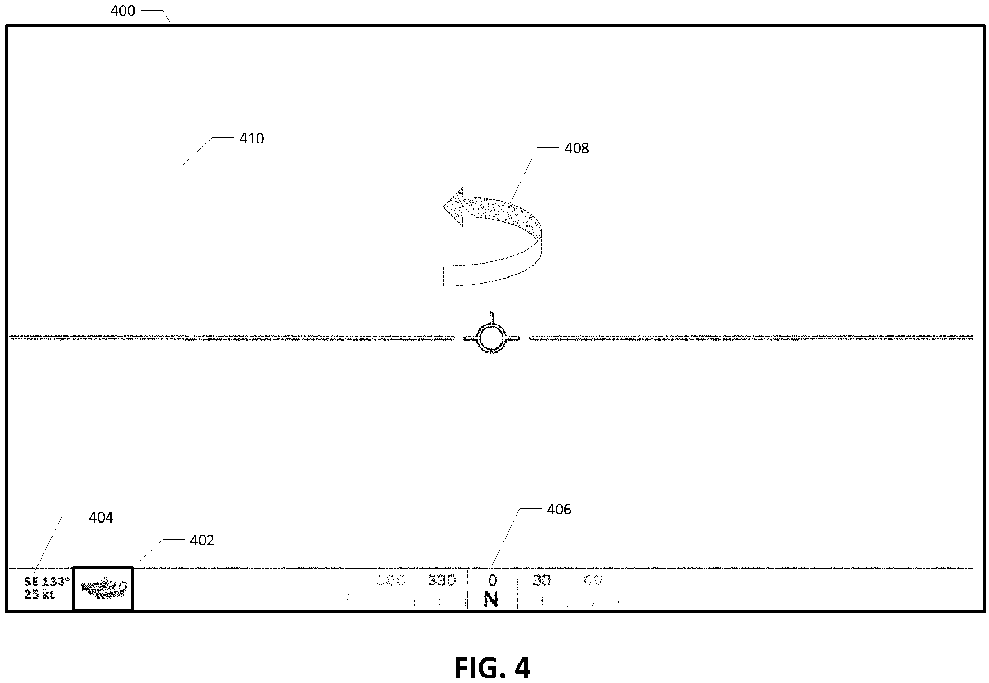

FIG. 4 illustrates an example improved user interface including a dynamic wind indicator in accordance with at least some example embodiments of the present disclosure. Specifically, FIG. 4 depicts an example improved user interface 400 including a plurality of sub-interface(s) (e.g., "user interface elements" or "interface elements"). In some embodiments, the intuitive display apparatus 200 generates, outputs, and/or otherwise causes rendering of the user interface 400 or one or more portion(s) thereof (e.g., the dynamic wind indicator 402). Each sub-interface of the user interface 400 represents particular data that assists an operator, for example a pilot, associated with an aerial vehicle in attaining situational awareness while operating the aerial vehicle. In some embodiments, the user interface 400 embodies a user interface of a synthetic vision system associated with the aerial vehicle and rendered to a display onboard the aerial vehicle (e.g., a primary flight display).

As illustrated, the user interface 400 includes a primary view 410. In some embodiments, the primary view 410 depicts a captured and/or virtual representation of an environment. In some embodiments, the primary view 410 depicts an environment surrounding an aerial vehicle associated with the intuitive display apparatus 200. For example, in some embodiments, the primary view 410 includes real-time image data and/or real-time video data depicting a true representation of the environment around an aerial vehicle. Alternatively or additionally, in some embodiments, the primary view 410 depicts a virtual representation of the environment based at least in part on image data, video data, sensor data, stored terrain data, and/or the like. In this regard, the primary view 410 may visually depict the terrain and/or other environmental object(s) around an aerial vehicle to enable an operator to control the aerial vehicle based at least in part on such environment object(s).

The user interface 400 further includes aerial vehicle directionality element 406. The aerial vehicle directionality element 406 depicts an indication of the forward path along which an aerial vehicle is travelling, for example the aerial vehicle of which the intuitive display apparatus 200 generating the user interface 400 is onboard. As illustrated, the aerial vehicle directionality element 406 indicates that the aerial vehicle is travelling close to due north at nearly 0° from a particular axis (e.g., defining the northern direction). In this regard, as the aerial vehicle is controlled throughout the environment (e.g., to turn left and/or right throughout an airspace), it will be appreciated that the aerial vehicle directionality element 406 in some embodiments is updated to depict the current forward-direction of the aerial vehicle with respect to the particular axis. In some embodiments, the intuitive display apparatus 200 configures the aerial vehicle directionality element 406 based at least in part on data indicating an orientation, direction of travel, and/or other path of an aerial vehicle. In some embodiments, the intuitive display apparatus 200 receives and/or captures such data utilizing one or more sensor(s) onboard the aerial vehicle, for example as part of or otherwise communicatively coupled with the intuitive display apparatus 200.

The user interface 400 further includes wind data text elements 404. As illustrated, the wind data text elements 404 includes text interface elements that indicate a wind direction and wind speed. In some embodiments, the data values depicted by such text interface elements represent wind movement data received by the intuitive display apparatus 200 that rendered the user interface 400. For example, in some embodiments the intuitive display apparatus 200 sets the wind data text elements 404 to depict particular data values that correspond to wind directionality data and wind speed data in received and/or captured wind movement data. As illustrated, the wind data text elements 404 indicates that the wind in the environment surrounding the aerial vehicle is moving at 25 knots in a direction 133 degrees to the southeast. In some embodiments, for example, the intuitive display apparatus 200 determines the speed value "25" from wind speed data and the direction "SE 133°" from wind directionality data, and renders the wind data text elements 404 accordingly. In some contexts, text elements indicating one or more aspects of an environment (e.g., wind speed and wind direction) are included as determined from regulatory requirement(s), system required configuration(s), and/or the like that require particular interface element(s) to depict particular data value(s).

During operation of an aerial vehicle, it often is vital to know the wind speed and wind directionality to control the aerial vehicle as desired. For example, in various contexts an aerial vehicle is controlled in a manner that safely operates in a desired manner (e.g., a desired direction at a desired speed) despite the wind impacting operation of the aerial vehicle. It will be appreciated that while the wind data text elements 404 do convey aspects of wind movement data that are relevant to the operator of the aerial vehicle, the raw data values depicted alone require additional consideration by the operator to fully attain situational awareness regarding the impact of the wind. For example, given the wind data text elements 404 alone, an operator of the aerial vehicle must determine which direction corresponds to "SE 133°." Once determined, the operator must also determine how wind in that direction will impact the aerial vehicle. Additionally, the operator must also specifically determine how wind at the particular current wind speed (e.g., "25 knots") as depicted by the wind data text elements 404 will impact the vehicle. For example, in this regard the operator must determine how strongly and in what direction the wind will affect the flight of the aerial vehicle based on the current direction that the aerial vehicle is travelling. In this regard, an operator often cannot attain accurate situational awareness quickly utilizing the wind data text elements 404 alone, and must utilize an increased cognitive load to attain such situational awareness.

The user interface 400 further includes a user interface element representation of dynamic wind indicator 402. As illustrated, the dynamic wind indicator 402 is specially configured to intuitively convey various information associated with wind in an environment. For example, in some embodiments the intuitive display apparatus 200 configures the dynamic wind indicator 402 utilizing the same wind movement data that was utilized to configure the wind data text elements 404. Additionally or alternatively, in some embodiments the dynamic wind indicator 402 is configured based at least in part on one or more additional data value(s), as described herein.

As depicted, the dynamic wind indicator 402 embodies an animated 3D chevron row. The animated 3D chevron row includes a plurality of animated 3D chevrons, each animated 3D chevron animated by traversing in a particular direction of a 3D environment. In some embodiments, the intuitive display apparatus 200 continuously renders the animated 3D chevron row embodying the dynamic wind indicator 402 with new animated 3D chevrons at the beginning of the animated 3D chevron row. Similarly, one or more animated 3D chevron(s) may be de-rendered upon detecting one or more data-driven triggering condition(s), for example after an animated 3D chevron has been instantiated for a threshold interval of time, after the animated 3D chevron has travelled a particular distance in the 3D environment, and/or after the animated 3D chevron is determined no longer in frame. In this regard, as the animated 3D chevron row is updated, the intuitive display apparatus 200 may update the animated 3D chevrons to ensure the dynamic wind indicator 402 is rendered as a continuous animation of moving chevrons embodied as individual 3D objects. In other embodiments, the dynamic wind indicator 402 may be embodied by any of a myriad of other 3D object(s) and/or image(s). For example, in some embodiments, the dynamic wind indicator 402 embodies or includes a single, solid 3D arrow.

In some embodiments, the intuitive display apparatus 200 configures one or more visual property/properties of the dynamic wind indicator 402 based at least in part on wind movement data. For example, in some embodiments, the intuitive display apparatus 200 sets the animation speed of the animated 3D chevron row embodying the dynamic wind indicator 402 based at least in part on wind speed data of wind movement data received by and/or captured by the intuitive display apparatus 200. In one example contexts, the intuitive display apparatus 200 sets the animation speed of the animated 3D chevron row such that the animated 3D chevrons thereof translate and/or otherwise move at a particular speed or otherwise the animated 3D chevron row updates at a particular frame rate based on the wind speed data. In some embodiments, the intuitive display apparatus 200 sets the animation speed as the wind speed data is higher, and slower as the wind speed data is lower. In some embodiments, the intuitive display apparatus 200 determines the animation speed to set the dynamic wind indicator 402 based on a particular mathematical formula, algorithm, lookup table of data value(s) and/or ranges of data value(s), and/or the like.

It will be appreciated that, in some embodiments, one or more other visual properties of the dynamic wind indicator 402 is/are set based at least in part on wind speed data. For example, in some embodiments, the intuitive display apparatus 200 configures a size, shape, color, animation type, particle effect, or the like of or associated with the dynamic wind indicator 402 based at least in part on the wind speed data. In some embodiments, for example where the dynamic wind indicator 402 includes a plurality of 3D object(s), the individual 3D object(s) of the plurality of 3D object(s) pulse in succession (e.g., according to a particular order), and/or pulse in the same time, based at least in part on wind speed data and/or one or more other portion(s) of data. Additionally or alternatively, in some embodiments, a hue, saturation, transparency, or opacity value of the dynamic wind indicator 402 is set based at least in part on the wind speed data. In some embodiments, the dynamic wind indicator 402 is configured to depict an animated color ramp that traverses along a 3D object, or an image (e.g., in 2D), at a particular rate based at least in part on the wind speed data, for example by animating at a faster speed as the wind speed data increases in value. Any such visual property may be altered based at least in part on the value of the wind speed data.

In some embodiments, the intuitive display apparatus 200 further configures the dynamic wind indicator 402 based at least in part on the same and/or one or more other portion(s) of the wind movement data. For example, in some embodiments, the intuitive display apparatus 200 configures the dynamic wind indicator 402 based at least in part on wind directionality data of the wind movement data received by and/or captured by the intuitive display apparatus 200. In some such embodiments, the intuitive display apparatus 200 sets the orientation of the dynamic wind indicator 402 such that the animated 3D chevron row is directed to a particular direction of a 3D environment. In some embodiments, the intuitive display apparatus 200 sets the orientation to the direction of the 3D environment to face a direction represented by the wind directionality data. As illustrated, the orientation of the dynamic wind indicator 402 may be set to a direction that corresponds to the southeast by 133°, as depicted by the wind data text elements 404.

Additionally or alternatively, in some embodiments, the dynamic wind indicator 402 is oriented based at least in part on directionality data associated with the aerial vehicle itself. For example, in some embodiments, the dynamic wind indicator 402 is orientated based at least in part on aerial vehicle direction data (e.g., vehicle heading data) that indicates a direction of travel of the aerial vehicle (e.g., a forward-facing direction of travel in a circumstance where the aerial vehicle is flying forward). In this regard, in some embodiments, the direction of travel of the aerial vehicle is utilized as an axis to be compared with the wind directionality data to rotate and/or otherwise orient the dynamic wind indicator 402 based at least in part on the deviation of the direction represented by the wind directionality data from the direction of travel. For example, in some embodiments, the animated 3D chevron row embodying the dynamic wind indicator 402 is oriented to face "outward" from the user interface 400 in a circumstance where the direction of travel of the aerial vehicle is opposite the direction of the 3D environment represented by the wind directionality data. Similarly, in some embodiments the animated 3D chevron row embodying the dynamic wind indicator 402 is oriented to face "inward" from the user interface 400 in a circumstance where the direction of travel of the aerial vehicle matches the direction of the 3D environment represented by the wind directionality data. It will be appreciated that, in this regard, the intuitive display apparatus 200 may render the dynamic wind indicator 402 at any orientation depicting a direction of a 3D environment based on the angle offsets in each dimension between a first vector representing the direction of travel of an aerial vehicle (e.g., represented by aerial vehicle movement data captured by one or more sensor(s) of or communicatively coupled with the 200, for example) and a second vector representing the direction of the 3D environment corresponding to wind directionality data.

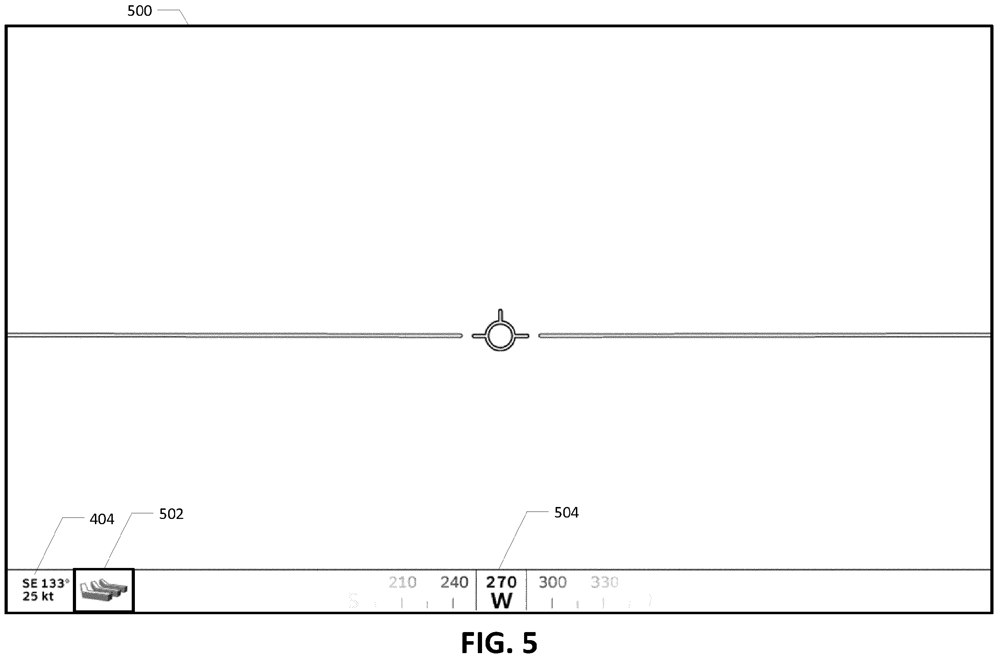

As described, the dynamic wind indicator 402 of the user interface 400 may dynamically update as particular updated data is received and/or captured, for example during operation of the aerial vehicle. In one example context, the aerial vehicle is operated to turn in accordance with aerial vehicle steering direction 408, for example turning to the left as depicted in FIG. 4. The aerial vehicle steering direction 408 is not rendered to the user interface 400, and meant only to provide a depiction of the direction in which the aerial vehicle associated with the intuitive display apparatus 200 travels for purposes of depicting and describing updates to the user interface 400. Specifically in the context as depicted, the aerial vehicle turns to the left 90 degrees between the time that user interface 400 is depicted in FIG. 4 and the time that user interface 500 is depicted in FIG. 5. It will further be appreciated that this particular change in operation is merely exemplary, and the dynamic wind indicator 402 may update based on any change in direction indicated in wind directionality data and/or change in direction of an aerial vehicle.

FIG. 5 illustrates an example improved user interface including an updated dynamic wind indicator based at least in part on a change in a direction travelled by an aerial vehicle in accordance with at least some example embodiments of the present disclosure. Specifically, FIG. 5 illustrates a user interface 500 updated upon completion of the 90-degree turn depicted and described with respect to the aerial vehicle steering direction 408 of FIG. 4. In some embodiments, the intuitive display apparatus 200 causes rendering of a new user interface each time upon receiving and/or otherwise capturing new data utilized to update at least a portion of the rendered user interface. Alternatively or additionally, in some embodiments, the intuitive display apparatus 200 causes updating of the user interface 400 to the user interface 500, for example, by re-rendering and/or otherwise causing update of one or more of the sub-interface(s) thereof, such as by updating the data and/or values depicted via the wind data text elements 404, the user interface element representing the dynamic wind indicator 402, the primary view 410, and/or the aerial vehicle directionality element 406.

The user interface 500 includes aerial vehicle directionality element 504. The aerial vehicle directionality element 504 depicts an indication of the updated direction of travel along which an aerial vehicle is travelling, for example the aerial vehicle of which the intuitive display apparatus 200 generating the user interface 500 is onboard. The direction of travel is updated based on the performed 90-degree left turn depicted and described with respect to FIG. 4. In this regard, the aerial vehicle directionality element 504 indicates that the aerial vehicle is travelling close to due west at 270° from a particular axis (e.g., defining the northern direction). In this regard, the aerial vehicle directionality element 504 may indicate that the aerial vehicle is now facing due west (instead of north as depicted and described with respect to FIG. 4). In some such embodiments, the intuitive display apparatus 200 configures the aerial vehicle directionality element 504 to depict this new value based on updated data indicating an orientation, direction of travel, and/or other path of the aerial vehicle.

As illustrated by wind data text elements 404 within the user interface 500, the wind speed and wind direction in the environment has not changed. In this regard, the wind remains travelling in a southeast direction (e.g., at 133-degrees from the northern axis) at 25 knots. However, it will be appreciated that the effects of the wind on the aerial vehicle may have changed due to the change in orientation of the aerial vehicle itself (e.g., by turning 90-degrees to the left). Accordingly, the wind data text elements 404 alone fails to intuitively provide an updated situational awareness based on the changes in orientation of the aerial vehicle.

The user interface 500 further includes an updated user interface element representation of dynamic wind indicator 502. The dynamic wind indicator 502 is updated from the dynamic wind indicator 402 as depicted and described with respect to FIG. 4 based at least in part on the changes in the orientation of the aerial vehicle associated therewith. As illustrated, the dynamic wind indicator 502 is updated as oriented to a new direction of a 3D environment. For example, in some embodiments the intuitive display apparatus 200 sets the orientation of the dynamic wind indicator 502 to an updated direction of the 3D environment that is offset based on the difference between the vector representing the updated direction of travel for the aerial vehicle (e.g., 270-degrees or due west) and the vector representing the direction of the wind based at least in part on wind directionality data. In this regard, the intuitive display apparatus 200 may rotate the orientation of the dynamic wind indicator 502 to a direction of the 3D environment to match the rotation of the aerial vehicle (e.g., 90-degrees towards the left). As depicted, the dynamic wind indicator is rotated 90-degrees clockwise from the representation of the dynamic wind indicator 402 and the representation of the dynamic wind indicator 502 to match the rotation of the aerial vehicle from the north-facing direction as depicted and described in FIG. 4 to the west-facing direction as depicted and described in FIG. 5.

In some embodiments, the intuitive display apparatus 200 continuously monitors one or more data value(s) and configures the dynamic wind indicator based on such data value(s). For example, in some embodiments, the intuitive display apparatus 200 continuously monitors (e.g., in real-time via one or more sensor(s) of the intuitive display apparatus 200 and/or communicatively coupled therewith) the wind directionality data for a particular environment and/or aerial vehicle directionality data associated with the aerial vehicle. In some embodiments, the intuitive display apparatus 200 reconfigures one or more property/properties of the dynamic wind indicator as each updated data portion is received.

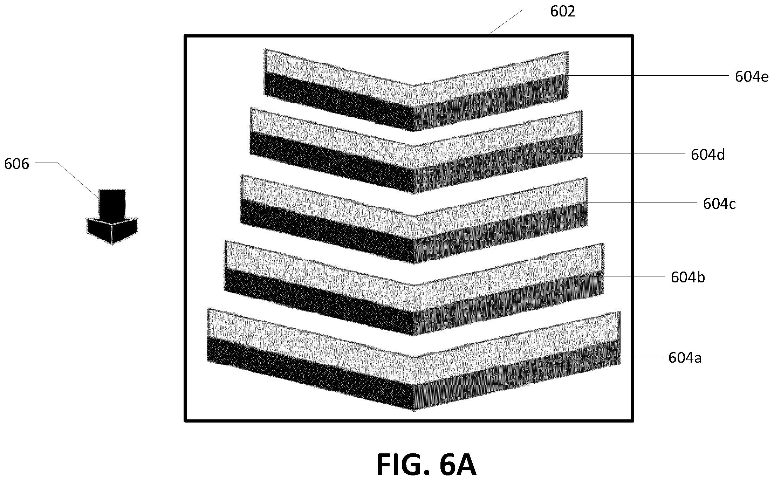

FIG. 6A illustrates an example dynamic wind indicator including an animated 3D chevron row in accordance with at least some example embodiments of the present disclosure. Specifically, FIG. 6A illustrates a representation of a dynamic wind indicator including an animated 3D chevron row 602 in a virtual 3D environment. As illustrated, the animated 3D chevron row 602 includes a plurality of individual animated 3D chevrons, specifically animated 3D chevrons 604a-604e. In some embodiments, the intuitive display apparatus 200 renders or otherwise causes rendering of a representation of the dynamic wind indicator as a user interface element within a particular user interface, for example as depicted and described with respect to user interface 400 and user interface 500.

As depicted, the animated 3D chevron row 602 is orientated facing a direction 606. Specifically, direction 606 is depicted "outwards" from the representation of the dynamic wind indicator (e.g., facing the user viewing the depiction). In some embodiments, the direction 606 corresponds to a particular direction of a 3D environment at which the wind is impacting an aerial vehicle, for example as determined based at least in part on wind directionality data and/or aerial vehicle directionality data captured and/or received by the intuitive display apparatus 200. In this regard, the intuitive display apparatus 200 configures the animated 3D chevron row 602 such that each of the animated 3D chevrons 604a-604e are oriented to face the direction 606.

In some embodiments, the intuitive display apparatus 200 generates and/or maintains the animated 3D chevron row 602 in a 3D virtual environment. Additionally or alternatively, in some embodiments, the intuitive display apparatus 200 maintains the 3D virtual environment within which the dynamic wind indicator is positioned. In some such embodiments, the intuitive display apparatus 200 generates and/or maintains one or more virtual camera(s) that are utilized to capture representation(s) of the dynamic wind indicator within the virtual 3D environment. For example, in some embodiments, the virtual camera defines a viewport within which the dynamic wind indicator is positioned. In some such embodiments, the intuitive display apparatus 200 orients the animated 3D chevron row 602 within the virtual environment based at least in part on received and/or captured data (e.g., the wind directionality data and/or aerial vehicle directionality data). In some other embodiments, the intuitive display apparatus 200 orients a virtual camera within the virtual 3D environment based at least in part on the received and/or captured data, for example such that the animated 3D chevron row 602 is depicted as oriented in accordance with the direction 606 without actually altering the rotation of the animated 3D chevron row 602 embodying the dynamic wind indicator.

In some embodiments, the animated 3D chevron row 602 animates such that the animated 3D chevron 604a-604e travel in the direction 606. In some such embodiments, the intuitive display apparatus 200 sets the animation speed of the animated 3D chevron row 602 based at least in part on wind speed data, for example represented as a portion of wind movement data captured and/or received by the intuitive display apparatus 200. In some such embodiments, the animated 3D chevron 604a-604e may appear to be moving faster in circumstances where the wind speed data indicates a higher wind speed value, and the animated 3D chevron 604a-604e may appear to be moving slower in circumstances where the wind speed data indicates a lower wind speed value. In some embodiments, the animation speed embodies a frame rate at which the representation of the dynamic wind indicator is refreshed. In some other embodiments, the animation speed embodies a physical speed and/or position distance traveled by each of the animated 3D chevron 604a-604e each frame. In this regard, as the representation of the dynamic wind indicator is rendered it may be updated each frame to indicate the wind speed data as movement of the animated 3D chevron 604a-604e.

It will be appreciated that the animated 3D chevrons depicted and described herein are one exemplary visual object that may be utilized as a dynamic wind indicator. The animated 3D chevrons advantageously indicate directionality by enabling such visual indicators to point in a particular direction readily understood by a user. Additionally, the animated 3D chevron row enables animating of the various animated 3D chevrons therein to intuitively indicate a value of wind speed data without requiring a second visual object. For example, one or more visual properties of the animated 3D chevrons may be configured without utilizing an additional or alternative visual object. In this regard, the animated 3D chevron row intuitively conveys multiple data values (e.g., wind speed data and wind directionality data) utilizing a single rendered visual object.

In other embodiments, another visual object may be utilized as a dynamic wind indicator. For example, in some embodiments a dynamic wind indicator includes or is embodied by one or more arrow(s), custom wind image(s) or wind virtual object(s), and/or the like having one or more configurable visual property/properties (e.g., animation speed, color, opacity, and/or the like). Additionally or alternatively, in some embodiments, the dynamic wind indicator is configured to indicate particular data value(s) (e.g., wind speed data) utilizing any of a myriad of configurable visual properties other than animation speed, including and without limitation color, opacity, size, and/or the like of the visual object(s) embodying the dynamic wind indicator.

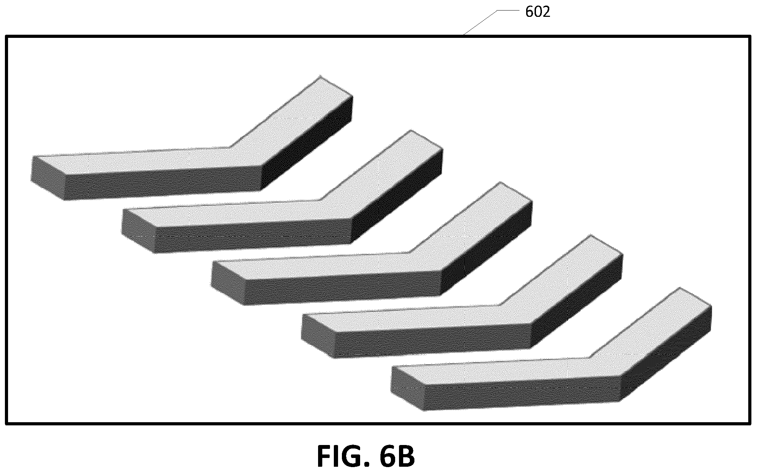

FIG. 6B depicts a representation of the dynamic visual indicator set at a second orientation. In this regard, it will be appreciated that the dynamic visual indicator includes the animated 3D chevron row 602, with each individual animated 3D chevon thereof oriented in a second direction (e.g., towards the bottom-right of the figure). It will be appreciated that the dynamic wind indicator may be based on changes in one or more portion(s) of data, for example updated wind movement data and/or updated orientation data associated with one or more computing device(s) and/or system(s) (e.g., vehicle direction data, heading data, accelerometer data, and/or the like).

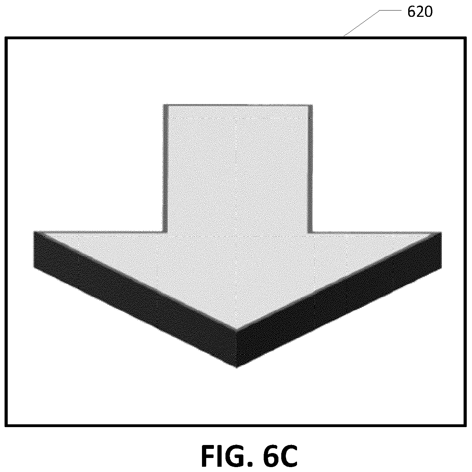

FIG. 6C depicts a representation of another dynamic wind indicator. Specifically, FIG. 6C depicts a dynamic wind indicator embodying a solid 3D arrow 620. It will be appreciated that the solid 3D arrow 620 may be configured similarly to that of the animated 3D chevron row 602. For example, the solid 3D arrow 620 may be oriented, configured, animated, and/or otherwise configured based at least in part on wind movement data. Additionally or alternatively, the solid 3D arrow 620 in some embodiments is configured based at least in part on orientation data associated with one or more computing device(s), vehicle(s), and/or the like.

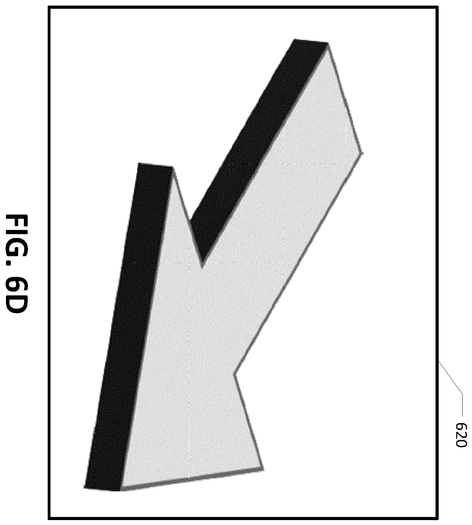

Similarly, FIG. 6D depicts a representation of the solid 3D arrow 620 set to a second orientation. It will be appreciated that the orientation of the solid 3D arrow 620 may be similarly configured as the animated 3D chevron row 302 depicted and described in FIG. 6B.

### EXAMPLE USER INTERFACES AND USER INTERFACE ELEMENTS OF THE DISCLOSURE

Having described example systems, apparatuses, data flows, user interfaces, and user interface elements in accordance with the present disclosure, example processes of the disclosure will now be discussed. It will be appreciated that each of the flowcharts depicts an example computer-implemented process that is performable by various means, including one or more of the apparatuses, systems, devices, and/or computer program products described herein, for example utilizing one or more of the specially configured components thereof.

It will be understood that each block of the processes, and combinations of blocks in the flowcharts, may be implemented by various means including hardware and/or a computer program product comprising one or more computer-readable mediums having computer-readable program instructions stored thereon. For example, one or more of the processes described herein in some embodiments is/are embodied by computer program of a computer program product. In this regard, the computer program product(s) that embody the process(es) described herein in some embodiments comprise one or more non-transitory memory devices of a computing device, apparatus, and/or the like (for example, the memory 204 of the intuitive display apparatus 200) storing instructions executable by a processor of a computing device (for example, by the processor 202 of the intuitive display apparatus 200). In some embodiments, the computer program instructions of the computer program product that embody the processes are stored by non-transitory computer-readable storage mediums of a plurality of computing devices. I will be appreciated that any such computer program product(s) may be loaded onto one or more computer(s) and/or other programmable apparatus(es) (for example, an intuitive display apparatus 200) to product a machine, such that the computer program product including the program code instructions that execute on the computer(s) or other programmable apparatus(es) create means for implementing the functions specified in the operational block(s). Further, in some embodiments, the computer program product includes one or more non-transitory computer-readable memories on which the computer program instructions are stored such that the one or more computer-readable memories can direct one or more computer(s) and/or other programmable apparatus(es) to function in a particular manner, such that the computer program product comprises an article of manufacture that implements the function(s) specified in the operational block(s). Additionally or alternatively, in some embodiments, the computer program instructions of one or more computer program product(s) are loaded onto computer(s) or other programmable apparatus(es) to cause a series of operations to be performed on the computer(s) or other programmable apparatus(es) a computer-implemented process such that the instructions that execute on the computer(s) or other programmable apparatus(es) implement the functions specified in the operational block(s).

Each of the processes depicted includes a plurality of operational blocks defining a particular algorithm for performing one or more portion(s) of functionality for generating and/or outputting improved user interface(s) as described herein. The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

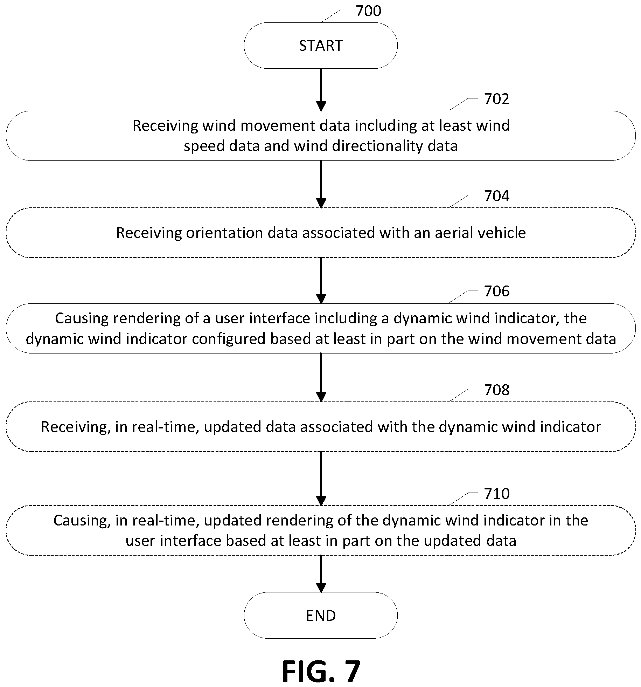

FIG. 7 illustrates a flowchart depicting example operations of an example process for causing rendering of improved user interface(s) in accordance with at least some example embodiments of the present disclosure. Specifically, FIG. 7 depicts operations of an example process 700 for causing rendering of improved user interface(s) including at least one representation of a dynamic wind indicator. In some embodiments, the process 700 is embodied by a computer-implemented process executable by any of a myriad of computing device(s), apparatus(es), system(s), and/or the like as described herein. Alternatively or additionally, in some embodiments, the process 700 is embodied by computer program code stored on a non-transitory computer-readable storage medium of a computer program product configured for execution to perform the process as depicted and described. Alternatively or additionally, in some embodiments, the process 700 is performed by one or more specially configured computing devices, such as the intuitive display apparatus 200 alone or in communication with one or more other component(s), device(s), system(s), and/or the like. In this regard, in some such embodiments, the intuitive display apparatus 200 is specially configured by computer-coded instructions (e.g., computer program instructions) stored thereon, for example in the memory 204 and/or another component depicted and/or described herein and/or otherwise accessible to the intuitive display apparatus 200, for performing the operations as depicted and described. In some embodiments, the intuitive display apparatus 200 is in communication with one or more external apparatus(es), system(s), device(s), and/or the like, to perform one or more of the operations as depicted and described. For example, the intuitive display apparatus 200 in some embodiments is in communication with an end-user computing device, one or more external system(s), and/or the like. For purposes of simplifying the description, the process 700 is described as performed by and from the perspective of the intuitive display apparatus 200.

The process 700 begins at operation 702. At operation 702, the intuitive display apparatus 200 includes means such as the sensor(s) 210, flight control circuitry 212, wind indication management circuitry 214, communications circuitry 208, input/output circuitry 206, processor 202, and/or the like, or a combination thereof, to receive wind movement data. In some contexts, the wind movement data represents one or more aspects of wind within a particular environment, for example within which an aerial vehicle associated with the intuitive display apparatus 200 is operating. In some embodiments, the wind movement data includes at least wind speed data (e.g., representing a speed at which wind within a particular environment is travelling) and wind directionality data (e.g., representing a direction in which wind within a particular environment is travelling). In some embodiments, the intuitive display apparatus 200 receives the wind movement data by capturing the wind movement data utilizing one or more sensor(s) of the intuitive display apparatus 200 and/or communicable with the intuitive display apparatus 200. Alternatively or additionally, in some embodiments, the intuitive display apparatus 200 receives the wind movement data as data transmission(s) from one or more computing device(s), system(s), and/or apparatus(es) external from the intuitive display apparatus 200. For example, in some embodiments, the intuitive display apparatus 200 receives the wind movement data from one or more other aerial vehicles operating within the same environment.

At optional operation 704, the intuitive display apparatus 200 includes means such as the sensor(s) 210, flight control circuitry 212, wind indication management circuitry 214, communications circuitry 208, input/output circuitry 206, processor 202, and/or the like, or a combination thereof, to receive orientation data associated with an aerial vehicle. In some embodiments, the intuitive display apparatus 200 determines the orientation data associated with the aerial vehicle by capturing such orientation data via one or more sensor(s) of the intuitive display apparatus 200 and/or communicable with the intuitive display apparatus 200. In some embodiments, the orientation data associated with the aerial vehicle represents a direction of travel in which the aerial vehicle is travelling. Alternatively or additionally, in some embodiments, the orientation data associated with the aerial vehicle represents a forward-facing direction of the aerial vehicle.

At operation 706, the intuitive display apparatus 200 includes means such as the sensor(s) 210, flight control circuitry 212, wind indication management circuitry 214, communications circuitry 208, input/output circuitry 206, processor 202, and/or the like, or a combination thereof, to cause rendering of a user interface including a dynamic wind indicator. In some embodiments, the dynamic wind indicator is configured based at least in part on the wind movement data. In some embodiments, the dynamic wind indicator is further configured based at least in part on the orientation data associated with the aerial vehicle. For example, in some embodiments the intuitive display apparatus 200 configures one or more visual property/visual properties of the dynamic wind indicator based at least in part on the wind speed data of the wind movement data. In some such embodiments, the intuitive display apparatus 200 configures the dynamic wind indicator to visually indicate the value of the wind speed data by setting one or more visual property/visual properties to particular data value(s) based at least in part on the data value of the wind speed data. For example, in some embodiments, as the data value of the wind speed data increases the intuitive display apparatus 200 sets a color of the dynamic wind indicator to a darker value, increases the size of the dynamic wind indicator, increases an opacity of the dynamic wind indicator, increases an animation speed of the dynamic wind indicator, and/or the like.

Alternatively or additionally, in some embodiments, the intuitive display apparatus 200 sets the dynamic wind indicator to a particular orientation based at least in part on the wind directionality data. For example, in some embodiments, the intuitive display apparatus 200 sets an orientation of the dynamic wind indicator to the direction represented by the wind directionality data. Alternatively or additionally, in some embodiments, the intuitive display apparatus 200 determines an impact vector representing the direction of the wind impacting an aerial vehicle based at least in part on the wind directionality data and the orientation data associated with the aerial vehicle. For example, in some embodiments, the intuitive display apparatus 200 generates the impact vector by determining the offset between the direction represented by the wind directionality data and a direction of travel of the aerial vehicle represented by the orientation data associated with the aerial vehicle. In some such embodiments, the intuitive display apparatus 200 sets the dynamic wind indicator to the direction represented by the impact vector.

In some embodiments, the intuitive display apparatus 200 causes rendering of the user interface including the dynamic wind indicator by outputting the user interface to a display communicatively coupled with the intuitive display apparatus 200. Alternatively or additionally, in some embodiments, the intuitive display apparatus 200 causes rendering of the user interface by transmitting one or more data object(s) utilized to configure the user interface including the dynamic wind indicator. In some such embodiments, the intuitive display apparatus 200 transmits one or more data object(s) embodying and/or utilized to configure the user interface to a client device communicatively coupled with the intuitive display apparatus 200 for rendering to a display of the client device. In one example context, the intuitive display apparatus 200 is onboard an aerial vehicle and causes rendering of the user interface including the dynamic wind indicator to a primary flight display of the aerial vehicle.

In some embodiments, the intuitive display apparatus 200 continues to dynamically update the dynamic wind indicator within the user interface as particular updated data value(s) is/are received. For example, at optional operation 708, the intuitive display apparatus 200 includes means such as the sensor(s) 210, flight control circuitry 212, wind indication management circuitry 214, communications circuitry 208, input/output circuitry 206, processor 202, and/or the like, or a combination thereof, to receive updated data associated with the dynamic wind indicator. In some embodiments, the intuitive display apparatus 200 continuously monitors particular data parameters utilized to configure the dynamic wind indicator, for example wind movement data and/or orientation data associated with an aerial vehicle. In some embodiments, the intuitive display apparatus 200 receives updated data comprising updated wind movement data. Alternatively or additionally, in some embodiments, the intuitive display apparatus 200 receives updated data comprising updated orientation data associated with the aerial vehicle. Alternatively or additionally still, in some embodiments, the intuitive display apparatus 200 receives updated data comprising both updated orientation data associated with an aerial vehicle and updated wind movement data. It will be appreciated that the updated data may be received in the manner described herein with respect to operations 702 and 704.

At optional operation 710, the intuitive display apparatus 200 includes means such as the sensor(s) 210, flight control circuitry 212, wind indication management circuitry 214, communications circuitry 208, input/output circuitry 206, processor 202, and/or the like, or a combination thereof, to cause, in-real-time, updated rendering of the dynamic wind indicator in the user interface. In some such embodiments, the intuitive display apparatus 200 causes updated rendering of the dynamic wind indicator based at least in part on the updated data received at optional operation 708. For example, in some embodiments, the intuitive display apparatus 200 updates one or more visual property/visual properties of the dynamic wind indicator based at least in part on the updated data, for example updated wind speed data of received updated wind movement data. Additionally or alternatively, in some embodiments, the intuitive display apparatus 200 updates the orientation of the dynamic wind indicator based at least in part on updated orientation data associated with the aerial vehicle based at least in part on the updated data, for example updated orientation data associated with the aerial vehicle. In this regard, the intuitive display apparatus 200 in some embodiments continuously updates the dynamic wind indicator and causes rendering of the updated dynamic wind indicator to the user interface in real-time to ensure that the user interface depicts an accurate dynamic wind indicator based on the most up-to-date data values utilized to configure said dynamic wind indicator.

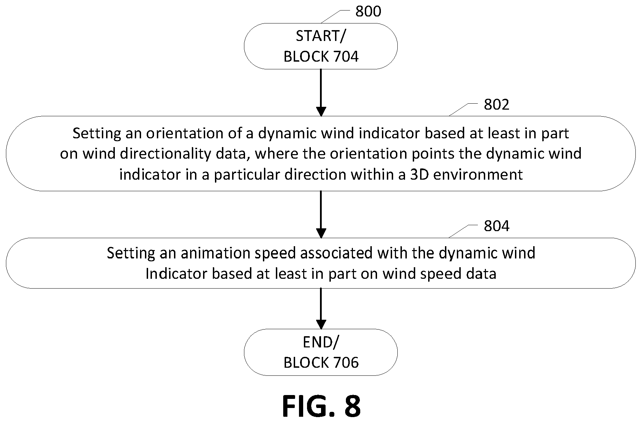

FIG. 8 illustrates a flowchart depicting example operations of an example process for configuring a dynamic wind indicator including an animated 3D chevron row in accordance with at least some example embodiments of the present disclosure. Specifically, FIG. 8 depicts operations of an example process 800 for generating a specially configured dynamic wind indicator based on received data, for example as a part of causing rendering of improved user interface(s) including at least one representation of a dynamic wind indicator. In some embodiments, the process 800 is embodied by a computer-implemented process executable by any of a myriad of computing device(s), apparatus(es), system(s), and/or the like as described herein. Alternatively or additionally, in some embodiments, the process 800 is embodied by computer program code stored on a non-transitory computer-readable storage medium of a computer program product configured for execution to perform the process as depicted and described. Alternatively or additionally, in some embodiments, the process 800 is performed by one or more specially configured computing devices, such as the intuitive display apparatus 200 alone or in communication with one or more other component(s), device(s), system(s), and/or the like. In this regard, in some such embodiments, the intuitive display apparatus 200 is specially configured by computer-coded instructions (e.g., computer program instructions) stored thereon, for example in the memory 204 and/or another component depicted and/or described herein and/or otherwise accessible to the intuitive display apparatus 200, for performing the operations as depicted and described. In some embodiments, the intuitive display apparatus 200 is in communication with one or more external apparatus(es), system(s), device(s), and/or the like, to perform one or more of the operations as depicted and described. For example, the intuitive display apparatus 200 in some embodiments is in communication with an end-user computing device, one or more external system(s), and/or the like. For purposes of simplifying the description, the process 800 is described as performed by and from the perspective of the intuitive display apparatus 200.

The process 800 begins at operation 802. In some embodiments, the process 800 begins after one or more operations depicted and/or described with respect to any of the other processes described herein. For example, in some embodiments as depicted, the process 800 begins after execution of operation 704. In this regard, some or all of the process 800 may replace or supplement one or more blocks depicted and/or described with respect to any of the processes described herein. In some embodiments, upon completion of the process 800, the flow of operations terminates. Additionally or alternatively, as depicted, in some embodiments upon completion of the process 800 flow returns to one or more operation(s) of another process, such as the operation 706. It will be appreciated that, in some embodiments, the process 800 embodies a sub-process of one or more other process(es) depicted and/or described herein, for example the process 700.

At operation 802, the intuitive display apparatus 200 includes means such as the sensor(s) 210, flight control circuitry 212, wind indication management circuitry 214, communications circuitry 208, input/output circuitry 206, processor 202, and/or the like, or a combination thereof, to set an orientation of a dynamic wind indicator based at least in part on wind directionality data. In some such embodiments, the orientation points the dynamic wind indicator in a particular direction within a 3D environment. For example, in some embodiments the intuitive display apparatus 200 sets the orientation of the dynamic wind indicator such that the dynamic wind indicator points in the same direction as the wind as represented by the wind directionality data. Alternatively or additionally, in some embodiments, the intuitive display apparatus 200 sets the orientation of the dynamic wind indicator to an impact vector generated based at least in part on the wind directionality data and orientation associated with an aerial vehicle (for example, embodying a direction of travel associated with the aerial vehicle and/or a forward-facing direction associated with the current orientation of the aerial vehicle). In some embodiments, the dynamic wind indicator embodies an animated 3D chevron row, such that the animated 3D chevron row is set to point the animated 3D chevrons of the animated 3D chevron row in the particular direction within the 3D environment. Additionally or alternatively, in some embodiments, the animated 3D chevron row animates in the same direction representing the orientation of the dynamic wind indicator.

At operation 804, the intuitive display apparatus 200 includes means such as the sensor(s) 210, flight control circuitry 212, wind indication management circuitry 214, communications circuitry 208, input/output circuitry 206, processor 202, and/or the like, or a combination thereof, to set an animation speed associated with the dynamic wind indicator based at least in part on wind speed data. In some embodiments, the intuitive display apparatus 200 performs a formulaic or an algorithmic transformation to generate an animation speed value based at least in part on the wind speed data. Alternatively or additionally, in some embodiments, the intuitive display apparatus 200 maintains and/or accesses a lookup table to determine the animation speed value based at least in part on the wind speed data. Alternatively or additionally still, in some embodiments, the intuitive display apparatus 200 maintains a plurality of value ranges that each correspond to a particular animation speed value, and determines which value range the wind speed data falls within to determine the corresponding animation speed value to utilize in configuring the dynamic wind indicator. In some such example embodiments where the dynamic wind indicator is embodied by an animated 3D chevron row, the animation speed corresponds to a rate at which the individual animated 3D chevrons of the animated 3D chevron row are represented as moving position (e.g., due to actual movement of a corresponding virtual object in a virtual environment, frame rate of an animation, and/or the like). It will be appreciated that, in other embodiments, the intuitive display apparatus 200 sets one or more other visual properties of the dynamic wind indicator other than animation speed in a similar manner utilizing the value represented by the wind speed data, including and without limitation a size, opacity, color, and/or the like of the dynamic wind indicator.

### CONCLUSION

While several example contexts are described herein with respect to processing of data by an aerial vehicle, it will be appreciated in view of this disclosure that embodiments may include or otherwise be implemented as a part of other vehicle(s), device(s), and/or the like. For example, in other contexts, embodiments of the present disclosure utilize sensor(s) of and/or display data to display(s) of other type(s) of vehicle(s), including ground vehicle(s). Alternatively or additionally, some embodiments utilize sensor(s) of and/or display data to display(s) of other device(s), including user device(s), back-end computing device(s), and/or the like. Indeed, in some embodiments, the sensor(s), computing device(s), and/or display(s) are embodied and/or otherwise included in one or more computing device(s) not integrated as part of any vehicle (e.g., as a standalone computing device). In is intended that all such contexts, device type(s), and/or the like be included within the scope of this disclosure and covered within the scope of the claims appended herein.

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results.

## Claims

1. A computer-implemented method (700, 800) comprising:
receiving (702) wind movement data comprising at least wind speed data and wind directionality data; the method **characterized by**:
causing (706) rendering of a user interface (400, 500) comprising an animated dynamic wind indicator (310, 402, 502, 602, 620),
wherein the dynamic wind indicator visually indicates a direction of a 3D environment based at least in part on the wind directionality data, and
wherein the animation speed of the dynamic wind indicator is configured based at least in part on the wind speed data.

2. The computer-implemented method of claim 1, wherein the dynamic wind indicator (602, 620) comprises an animated 3D chevron row, and wherein the computer-implemented method further comprises:
setting (802) an orientation of the animated 3D chevron row based at least in part on the wind directionality data, wherein the orientation points the animated 3D chevron row in the direction within the 3D environment; and
setting an animation speed associated with the animated 3D chevron row based at least in part on the wind speed data.

3. The computer-implemented method (700, 800) of any one of claims 1-2, wherein a further visual property of the dynamic wind indicator (310, 402, 502, 602, 620) is configured based at least in part on the wind speed data, the further visual property comprising an opacity property, a size property, or a color property, wherein the visual property is applied to an entirety of the dynamic wind indicator.

4. The computer-implemented method (700, 800) of any one of claims 1-3, wherein causing rendering of the user interface (400, 500)comprising the dynamic wind indicator (310, 402, 502, 602, 620) comprises:
causing rendering of the user interface to a primary flight display of an aerial vehicle.

5. The computer-implemented method (700, 800) of any one of claims 1-3, wherein at least a portion of the wind movement data is captured by at least one sensor of an aerial vehicle, and wherein the user interface (400, 500) is rendered to at least one display of the aerial vehicle.

6. The computer-implemented method (700, 800) of any one of claims 1-4, wherein at least a portion of the wind movement data is received by a first aerial vehicle from a second aerial vehicle, and wherein the user interface (400, 500) is rendered to at least one display of the first aerial vehicle.

7. The computer-implemented method (700, 800) of any one of claims 1-6, wherein the dynamic wind indicator (310, 402, 502, 602, 620) comprises at least one 3D object performing a continuous animation.

8. The computer-implemented method (700, 800) of any one of claims 1-7, the computer-implemented method further comprising:
receiving (708), in real-time, updated wind movement data; and
causing (710), in real-time, updated rendering of the dynamic wind indicator (310, 402, 502, 602, 620) in the user interface (400, 500) based at least in part on the updated wind movement data.

9. The computer-implemented method (700, 800) of any one of claims 1-8, the computer-implemented method further comprising:
receiving (704) orientation data associated with an or the aerial vehicle,
wherein the direction of the 3D environment is based at least in part on the orientation data.

10. The computer-implemented method (700, 800) of any one of claims 1-9, the computer-implemented method further comprising:
maintaining a virtual camera within the 3D environment; and
capturing the dynamic wind indicator (310, 402, 502, 602, 620) using the virtual camera.

11. The computer-implemented method (700, 800) of any one of claims 1-9, the computer-implemented method further comprising:
orienting a virtual camera within the 3D environment based at least in part on the wind movement data; and
capturing the dynamic wind indicator (310, 402, 502, 602, 620) using the virtual camera.

12. The computer-implemented method (700, 800) of any one of claims 1-10, the computer-implemented method further comprising:
receiving directionality data associated with an or the aerial vehicle;
orienting a virtual camera within the 3D environment based at least in part on the aerial vehicle; and
capturing the dynamic wind indicator (310, 402, 502, 602, 620) using the virtual camera.

13. The computer-implemented method (700, 800) of any one of claims 1-12, the computer-implemented method further comprising:
determining, using the wind movement data, the animation speed based at least in part on a mathematical formula, algorithm, lookup table, or range of data values.

14. An apparatus comprising at least one processor and at least one memory including computer program code, the at least one memory and the computer program code configured to, with the at least one processor, cause the apparatus to perform any one of the methods (700, 800) according to claims 1-13.

15. A computer program product comprising at least one non-transitory computer-readable medium having computer-readable program instructions stored therein, the computer-readable program instructions comprising instructions, which when performed by an apparatus, are configured to cause the apparatus to at least perform any one of the methods (700, 800) according to claims 1-13.

## Patentansprüche

1. Computerimplementiertes Verfahren (700, 800), umfassend:
Empfangen (702) von Windbewegungsdaten, umfassend mindestens Windgeschwindigkeitsdaten und Windausrichtungsdaten, wobei das Verfahren **gekennzeichnet ist durch**:
Veranlassen (706) des Wiedergebens einer Benutzerschnittstelle (400, 500), die einen animierten dynamischen Windindikator (310, 402, 502, 602, 620) umfasst,
wobei der dynamische Windindikator auf Basis mindestens teilweise der Windausrichtungsdaten eine Richtung einer 3D-Umgebung visuell angibt, und
wobei die Animationsgeschwindigkeit des dynamischen Windindikators auf Basis mindestens teilweise der Windgeschwindigkeitsdaten konfiguriert ist.

2. Computerimplementiertes Verfahren nach Anspruch 1, wobei der dynamische Windindikator (602, 620) eine Reihe von animierten 3D-Richtungspfeilen umfasst, und wobei das computerimplementierte Verfahren ferner Folgendes umfasst:
Einstellen (802) einer Orientierung der Reihe von animierten 3D-Richtungspfeilen auf Basis mindestens teilweise der Windausrichtungsdaten, wobei die Orientierung der Reihe von animierten 3D-Richtungspfeilen in die Richtung innerhalb der 3D-Umgebung weist; und
Einstellen einer Animationsgeschwindigkeit, die der Reihe von animierten 3D-Richtungspfeilen zugehörig ist, auf Basis mindestens teilweise der Windgeschwindigkeitsdaten.

3. Computerimplementiertes Verfahren (700, 800) nach einem der Ansprüche 1-2, wobei eine weitere visuelle Eigenschaft des dynamischen Windindikators (310, 402, 502, 602, 620) auf Basis mindestens teilweise der Windgeschwindigkeitsdaten konfiguriert ist, wobei die weitere visuelle Eigenschaft eine Deckkrafteigenschaft, eine Größeneigenschaft oder eine Farbeigenschaft umfasst, wobei die visuelle Eigenschaft auf eine Gesamtheit des dynamischen Windindikators angewendet wird.

4. Computerimplementiertes Verfahren (700, 800) nach einem der Ansprüche 1-3, wobei das Veranlassen des Wiedergebens der Benutzerschnittstelle (400, 500), die den dynamischen Windindikator (310, 402, 502, 602, 620) umfasst, Folgendes umfasst:
Veranlassen des Wiedergebens der Benutzerschnittstelle auf einer Hauptfluganzeige eines Luftfahrzeugs.

5. Computerimplementiertes Verfahren (700, 800) nach einem der Ansprüche 1-3, wobei mindestens ein Teil der Windbewegungsdaten durch mindestens einen Sensor eines Luftfahrzeugs erfasst wird, und wobei die Benutzerschnittstelle (400, 500) auf mindestens einer Anzeige des Luftfahrzeugs wiedergegeben wird.

6. Computerimplementiertes Verfahren (700, 800) nach einem der Ansprüche 1-4, wobei mindestens ein Teil der Windbewegungsdaten durch ein erstes Luftfahrzeug von einem zweiten Luftfahrzeug empfangen wird, und wobei die Benutzerschnittstelle (400, 500) auf mindestens einer Anzeige des ersten Luftfahrzeugs wiedergegeben wird.

7. Computerimplementiertes Verfahren (700, 800) nach einem der Ansprüche 1-6, wobei der dynamische Windindikator (310, 402, 502, 602, 620) mindestens ein 3D-Objekt umfasst, das eine kontinuierliche Animation durchführt.

8. Computerimplementiertes Verfahren (700, 800) nach einem der Ansprüche 1-7, das computerimplementierte Verfahren ferner umfassend:
Empfangen (708) in Echtzeit von aktualisierten Windbewegungsdaten; und
Veranlassen (710) in Echtzeit des aktualisierten Wiedergebens des dynamischen Windindikators (310, 402, 502, 602, 620) in der Benutzerschnittstelle (400, 500) auf Basis mindestens teilweise der aktualisierten Windbewegungsdaten.

9. Computerimplementiertes Verfahren (700, 800) nach einem der Ansprüche 1-8, das computerimplementierte Verfahren ferner umfassend:
Empfangen (704) von Orientierungsdaten, die einem oder dem Luftfahrzeug zugehörig sind,
wobei die Richtung der 3D-Umgebung mindestens teilweise auf den Orientierungsdaten basiert.

10. Computerimplementiertes Verfahren (700, 800) nach einem der Ansprüche 1-9, das computerimplementierte Verfahren ferner umfassend:
Unterhalten einer virtuellen Kamera innerhalb der 3D-Umgebung; und
Erfassen des dynamischen Windindikators (310, 402, 502, 602, 620) unter Verwendung der virtuellen Kamera.

11. Computerimplementiertes Verfahren (700, 800) nach einem der Ansprüche 1-9, das computerimplementierte Verfahren ferner umfassend:
Orientieren einer virtuellen Kamera innerhalb der 3D-Umgebung auf Basis mindestens teilweise der Windbewegungsdaten; und
Erfassen des dynamischen Windindikators (310, 402, 502, 602, 620) unter Verwendung der virtuellen Kamera.

12. Computerimplementiertes Verfahren (700, 800) nach einem der Ansprüche 1-10, das computerimplementierte Verfahren ferner umfassend:
Empfangen von Ausrichtungsdaten, die einem oder dem Luftfahrzeug zugehörig sind;
Orientieren einer virtuellen Kamera innerhalb der 3D-Umgebung auf Basis mindestens teilweise des Luftfahrzeugs; und
Erfassen des dynamischen Windindikators (310, 402, 502, 602, 620) unter Verwendung der virtuellen Kamera.

13. Computerimplementiertes Verfahren (700, 800) nach einem der Ansprüche 1-12, das computerimplementierte Verfahren ferner umfassend:
Bestimmen, unter Verwendung der Windbewegungsdaten, der Animationsgeschwindigkeit auf Basis mindestens teilweise einer mathematischen Formel, eines Algorithmus, einer Nachschlagetabelle oder eines Bereichs von Datenwerten.

14. Einrichtung umfassend mindestens einen Prozessor und mindestens einen Speicher, der einen Computerprogrammcode beinhaltet, wobei der mindestens eine Speicher und der Computerprogrammcode dazu konfiguriert sind, mit dem mindestens einen Prozessor die Einrichtung zu veranlassen, eines der Verfahren (700, 800) gemäß den Ansprüchen 1-13 durchzuführen.

15. Computerprogrammprodukt, umfassend mindestens ein nichtflüchtiges computerlesbares Medium mit darin gespeicherten computerlesbaren Programmanweisungen, wobei die computerlesbaren Programmanweisungen Anweisungen umfassen, die, wenn sie von einer Einrichtung durchgeführt werden, dazu konfiguriert sind, die Einrichtung zu veranlassen, mindestens eines der Verfahren (700, 800) gemäß den Ansprüchen 1-13 durchzuführen.

## Revendications

1. Procédé mis en œuvre par ordinateur (700, 800) comprenant :
la réception (702) de données de mouvement du vent comprenant au moins des données de vitesse du vent et des données directionnelles du vent ; le procédé étant **caractérisé par** :
la génération (706) de l'affichage d'une interface utilisateur (400, 500) comprenant un indicateur dynamique de vent animé (310, 402, 502, 602, 620),
dans lequel l'indicateur dynamique de vent indique visuellement la direction d'un environnement 3D sur la base au moins en partie des données directionnelles du vent, et
dans lequel la vitesse d'animation de l'indicateur dynamique de vent est configurée sur la base au moins en partie des données de vitesse du vent.

2. Procédé mis en œuvre par ordinateur selon la revendication 1, dans lequel l'indicateur dynamique de vent (602, 620) comprend une rangée de chevrons 3D animés, et dans lequel le procédé mis en œuvre par ordinateur comprend en outre :
le réglage (802) de l'orientation de la rangée de chevrons 3D animés sur la base au moins en partie des données directionnelles du vent, dans lequel l'orientation pointe la rangée de chevrons 3D animés vers la direction à l'intérieur de l'environnement 3D ; et
le réglage d'une vitesse d'animation associée à la rangée de chevrons 3D animés sur la base au moins en partie des données de vitesse du vent.

3. Procédé mis en œuvre par ordinateur (700, 800) selon l'une quelconque des revendications 1-2, dans lequel une autre propriété visuelle de l'indicateur dynamique de vent (310, 402, 502, 602, 620) est configurée sur la base au moins en partie des données de vitesse du vent, l'autre propriété visuelle comprenant une propriété d'opacité, une propriété de taille, ou une propriété de couleur, dans laquelle la propriété visuelle est appliquée à l'intégralité de l'indicateur dynamique de vent.

4. Procédé mis en œuvre par ordinateur (700, 800) selon l'une quelconque des revendications 1-3, dans lequel la génération de l'affichage de l'interface utilisateur (400, 500) comprenant l'indicateur dynamique de vent (310, 402, 502, 602, 620) comprend :
la génération de l'affichage de l'interface utilisateur sur un écran principal de vol d'un véhicule aérien.

5. Procédé mis en œuvre par ordinateur (700, 800) selon l'une quelconque des revendications 1-3, dans lequel au moins une partie des données de mouvement du vent est capturée par au moins un capteur d'un véhicule aérien, et dans lequel l'interface utilisateur (400, 500) est affichée sur au moins un écran du véhicule aérien.

6. Procédé mis en œuvre par ordinateur (700, 800) selon l'une quelconque des revendications 1-4, dans lequel au moins une partie des données de mouvement du vent est reçue par un premier véhicule aérien à partir d'un deuxième véhicule aérien, et dans lequel l'interface utilisateur (400, 500) est affichée sur au moins un écran du premier véhicule aérien.

7. Procédé mis en œuvre par ordinateur (700, 800) selon l'une quelconque des revendications 1-6, dans lequel l'indicateur dynamique de vent (310, 402, 502, 602, 620) comprend au moins un objet 3D exécutant une animation continue.

8. Procédé mis en œuvre par ordinateur (700, 800) selon l'une quelconque des revendications 1-7, le procédé mis en œuvre par ordinateur comprenant en outre :
la réception (708), en temps réel, des données de mouvement du vent mises à jour ; et
la génération (710), en temps réel, de l'affichage mis à jour de l'indicateur dynamique de vent (310, 402, 502, 602, 620) dans l'interface utilisateur (400, 500) sur la base au moins en partie des données de mouvement du vent mises à jour.

9. Procédé mis en œuvre par ordinateur (700, 800) selon l'une quelconque des revendications 1-8, le procédé mis en œuvre par ordinateur comprenant en outre :
la réception (704) des données d'orientation associées au véhicule aérien,
dans lequel la direction de l'environnement 3D est basée au moins en partie sur les données d'orientation.

10. Procédé mis en œuvre par ordinateur (700, 800) selon l'une quelconque des revendications 1-9, le procédé mis en œuvre par ordinateur comprenant en outre :
le maintien d'une caméra virtuelle à l'intérieur de l'environnement 3D ; et
la capture de l'indicateur dynamique de vent (310, 402, 502, 602, 620) à l'aide de la caméra virtuelle.

11. Procédé mis en œuvre par ordinateur (700, 800) selon l'une quelconque des revendications 1-9, le procédé mis en œuvre par ordinateur comprenant en outre :
l'orientation d'une caméra virtuelle à l'intérieur de l'environnement 3D sur la base au moins en partie des données de mouvement du vent ; et
la capture de l'indicateur dynamique de vent (310, 402, 502, 602, 620) à l'aide de la caméra virtuelle.

12. Procédé mis en œuvre par ordinateur (700, 800) selon l'une quelconque des revendications 1-10, le procédé mis en œuvre par ordinateur comprenant en outre :
la réception des données directionnelles associées à un ou au véhicule aérien ;
l'orientation d'une caméra virtuelle à l'intérieur de l'environnement 3D sur la base au moins en partie du véhicule aérien ; et
la capture de l'indicateur dynamique de vent (310, 402, 502, 602, 620) à l'aide de la caméra virtuelle.

13. Procédé mis en œuvre par ordinateur (700, 800) selon l'une quelconque des revendications 1-12, le procédé mis en œuvre par ordinateur comprenant en outre :
la détermination à l'aide des données de mouvement du vent, de la vitesse d'animation sur la base au moins en partie d'une formule mathématique, d'un algorithme, d'une table de correspondance ou d'une plage de valeurs de données.

14. Appareil comprenant au moins un processeur et au moins une mémoire incluant un code de programme informatique, ladite au moins une mémoire et le code de programme informatique étant configurés pour, avec ledit au moins un processeur, amener l'appareil à exécuter l'un quelconque des procédés (700, 800) selon les revendications 1-13.

15. Produit de programme informatique comprenant au moins un support non transitoire lisible par ordinateur comportant des instructions de programme lisibles par ordinateur stockées sur celui-ci, les instructions de programme lisibles par ordinateur comprenant des instructions qui, lorsqu'elles sont exécutées par un appareil, sont configurées pour amener l'appareil à exécuter au moins l'un quelconque des procédés (700, 800) selon les revendications 1-13.
